# EUROPÄISCHE PATENTSCHRIFT

(11) **EP 2 720 844 B1**
(45) Veröffentlichungstag und Bekanntmachung des Hinweises auf die Patenterteilung: **16.11.2016**
(21) Anmeldenummer: 12728265.5
(22) Anmeldetag: 15.06.2012
(51) Int. Cl.: B29C 33/02, B29C 45/73, B29C 45/00, H05B 3/14, C08K 3/04

(54) **BEHEIZBARE VORRICHTUNG, VERWENDUNG DER VORRICHTUNG UND VERFAHREN ZUR ERHITZUNG EINES MEDIUMS**
HEATABLE DEVICE, USE OF THE DEVICE AND METHOD FOR HEATING A MEDIUM
DISPOSITIF CHAUFFANT, UTILISATION DU DISPOSITIF ET PROCÉDÉ DE CHAUFFAGE D'UN MILIEU

(30) Priorität: 17.06.2011 DE 102011104541
(43) Veröffentlichungstag der Anmeldung: 23.04.2014
(73) Patentinhaber: FutureCarbon GmbH, 95448 Bayreuth (DE); Dr. Schneider Kunststoffwerke GmbH, 96317 Kronach-Neuses (DE)
(72) Erfinder: FORERO, Stefan, 95446 Weidenberg-Waizenreuth (DE); SCHÜTZ, Walter, 95466 Weidenberg (DE); MEINEN, Tomas, 82049 Pullach i. Isartal (DE); KEMPF, Johannes, 96317 Kronach (DE); STOPPA, Reiner, 96049 Bamberg-Gaustadt (DE); GRÜDL, Alexander, 96358 Teuschnitz (DE)
(74) Vertreter: Pröll, Jürgen
(86) Internationale Anmeldenummer: PCT/EP2012/061528
(87) Internationale Veröffentlichungsnummer: WO 2012/172094

(56) Entgegenhaltungen:
- WO-A1-03/024686
- WO-A1-2010/066730
- WO-A1-2011/035376
- WO-A2-2012/077925
- CN-U- 201 633 213
- US-A1- 2006 032 243

## Beschreibung

Die vorliegende Erfindung betrifft zunächst eine beheizbare Vorrichtung gemäß Patentanspruch 1. Weiterhin betrifft die Erfindung auch ein Verfahren zur Erhitzung eines Mediums gemäß Patentanspruch 7 sowie die Verwendung einer beheizbaren Vorrichtung in einem Variotherm-Verfahren im Thermoplastspritzguss nach Patentanspruch 10.

Die vorliegende Erfindung findet im Bereich der Spritzgießtechnologie Anwendung.

Mittels Spitzgießtechnik werden Bauteile gefertigt, wobei ein Medium in Form einer flüssigen Phase, etwa einer Schmelze, durch entsprechende Kanäle unter Druck in eine Form oder ein Werkzeug gespritzt wird und darin durch Abkühlung erstarrt. Das Spritzgießen ist ein gängiges Verfahren in der Kunststoffverarbeitung. Dabei wird mit einer Spritzgießmaschine der jeweilige Werkstoff, meist Kunststoff, in einer Spritzeinheit plastifiziert und in ein Spritzgießwerkzeug eingespritzt. Der Hohlraum des Werkzeugs bestimmt die Form und die Oberflächenstruktur des fertigen Bauteils.

Die Formen oder Werkzeuge haben in der Regel eine Arbeitstemperatur, die niedriger als die Temperatur des eingespritzten Mediums ist, beziehungsweise unterhalb der Erstarrungstemperatur der Schmelze liegt. Aufgrund der dadurch bedingten Abkühlung der Schmelze während des Spritzgießvorgangs kann es beispielsweise in solchen Bereichen der Form oder des Werkzeugs, die vom Medium aus mehreren Richtungen angeströmt werden und dieses dort zusammenfließt, zu Nähten, Schlieren oder Unebenheiten auf den Oberflächen kommen. Dies ist insbesondere bei Oberflächen, die sich später im Sichtbereich befinden und optisch makellos sein müssen, oder bei Teilen mit optischen Eigenschaften, z.B. Lichtleiter oder dergleichen, unerwünscht und von großem Nachteil.

Es besteht deshalb das Bedürfnis, in solchen Bereichen eine Heizeinrichtung vorzusehen, mittels derer eine lokale Beheizung der Vorrichtung, beispielsweise eines Werkzeugs, und damit dort eine Erhitzung des Mediums ermöglicht wird.

Eine solche Heizeinrichtung könnte beispielsweise als Heizpatrone ausgebildet sein. Heizpatronen sind jedoch thermisch relativ träge und erfordern eine konstruktive Umrüstung der Form oder des Werkzeugs, etwa durch Einbringung einer Bohrung. Weiterhin könnte auch eine induktive Beheizung vorgesehen werden, was jedoch insbesondere einen erhöhten Bauraumbedarf in der Peripherie der Form oder des Werkzeugs erfordert.

In der DE 101 36 678 A1 wird eine Heizeinrichtung zur Erhitzung einer Werkzeugkavität eines Spritzgießwerkzeugs beschrieben, wobei die Heizeinrichtung schichtförmig aufgebaut ist. Die Schichten der Heizeinrichtung sind an der Kavität angeordnet. Durch Zufuhr von elektrischem Strom kann eine der Schichten auf eine bestimmte Temperatur gebracht werden. Diese bekannte Lösung ist jedoch aufwändig, da mehrere unterschiedliche Schichten erforderlich sind. Damit ist auch die Herstellung einer solchen Vorrichtung aufwändig.
Darüber hinaus offenbart die US 2006/0032243 A1 eine Vorrichtung, welche ein hocheffizientes Kühlsystem aufweist. Dieses besondere Kühlsystem zeichnet ich dadurch aus, dass innerhalb der Kühlkanäle der Formen eine Supraflüssigkeit gefördert wird. Durch die Verwendung einer derartigen Supraflüssigkeit wird eine extrem schnelle Temperaturabfuhr aus der Form gewährleistet. Allerdings sind supraflüssige Eigenschaften nur im sehr niedrigen Temperaturbereich erzielbar, wodurch die industrielle Anwendung deutlich erschwert wird.

Ferner ist in der WO 2011/035376 A1 beschrieben, dass Spritzgussformen mittels Peltier-Elementen thermisch steuerbar sind, wobei die Formen ein entsprechendes Heizelement hierzu aufweisen.

Die WO 2011/035376 offenbart den Oberbegriff von Anspruch 1.

In der WO 03/024686 A1 wird ferner eine Hitzeaustauschvorrichtung offenbart, welche mittels großvolumiger Kammern für Wärmetauschmittel bzw. Wärmeleitmittel ausgestattet ist. Dies erweist sich in der Praxis aufgrund der großvolumigen Kammern als nachteilig, da es immer einen komplexen Aufbau und ein kompliziertes Anschließen an externe Leitungen bedingt.

In der WO 2010/066730 A1 wird eine Zusammensetzung eine leitfähigen Zubereitung offenbart, welche unterschiedlichste Materialien aufweisen kann.

Der vorliegenden Erfindung liegt deshalb die Aufgabe zugrunde, eine Vorrichtung sowie ein Verfahren der eingangs genannten Art derart weiterzubilden, dass die genannten Nachteile umgangen werden können. Insbesondere soll ermöglicht werden, dass auf konstruktiv sehr einfache Weise lokale Bereiche einer Vorrichtung schnell hochgeheizt und auch wieder abgekühlt werden können.

Diese Aufgabe wird gelöst durch die beheizbare Vorrichtung mit den Merkmalen gemäß dem unabhängigen Patentanspruch 1, durch das Verfahren mit den Merkmalen des unabhängigen Patentanspruchs 7 und durch die Verwendung nach Patentanspruch 10.

Weitere Merkmale und Details der Erfindung ergeben sich aus den Unteransprüchen, der Beschreibung sowie den Beispielen. Merkmale und Details, die im Zusammenhang mit der erfindungsgemäßen Vorrichtung beschrieben sind, gelten dabei selbstverständlich auch im Zusammenhang mit dem erfindungsgemäßen Verfahren, und umgekehrt.

Durch die vorliegende Erfindung wird insbesondere ermöglicht, dass die eingangs genannten Problemzonen in einer beheizbaren Vorrichtung, insbesondere in einer Einrichtung zur zumindest zeitweiligen Aufnahme eines Mediums, etwa in einem Behälter, einer Form, einem Werkzeug oder dergleichen, gezielt und partiell erhitzt werden können. Dabei ist die Erfindung insbesondere auch dort einsetzbar, wo kurze Produktzyklen vorherrschen, da die Erhitzung und Abkühlung der leitfähigen Zubereitung sehr schnell vonstatten geht.

Diese oben genannten Probleme lassen sich insbesondere überwinden, wenn die Strömungsdynamik des Mediums in den kritischen Bereichen der Einrichtung, beispielsweise in den kritischen Form- oder Werkzeugbereichen während des Spritzprozesses - bestehend aus Einspritz- und Abkühlungsphase - durch kurzzeitiges lokales Erwärmen über die normale Arbeitstemperatur des Werkzeugs verbessert und/oder der Temperaturgradient des Mediums in diesen Bereichen dadurch verringert wird.

Gemäß dem ersten Aspekt der Erfindung wird eine beheizbare Vorrichtung bereitgestellt, aufweisend einen Vorrichtungskörper, sowie eine Heizeinrichtung zur zumindest temporären und/oder bereichsweisen Erhitzung der Vorrichtung und/oder des Vorrichtungskörpers. Die Vorrichtung ist erfindungsgemäß dadurch gekennzeichnet, dass die Heizeinrichtung eine elektrisch und/oder thermisch leitfähige Zubereitung aufweist, dass die leitfähige Zubereitung wenigstens ein Kohlenstoffmaterial aufweist und dass die leitfähige Zubereitung zumindest bereichsweise an der beheizbaren Vorrichtung angeordnet und/oder ausgebildet ist.

Erfindungsgemäss weist der Vorrichtungskörper eine Einrichtung zur zumindest zeitweiligen Aufnahme eines Mediums auf. Die Einrichtung zur zumindest zeitweiligen Aufnahme eines Mediums wird im Folgenden alternativ auch als Aufnahmeeinrichtung bezeichnet. Die Heizeinrichtung ist in einem solchen Fall insbesondere zur zumindest temporären und/oder bereichsweisen Erhitzung der Einrichtung zur Aufnahme des Mediums und/oder des Mediums ausgebildet.
Eine solche leitfähige Zubereitung hat insbesondere den Vorteil, dass diese besonders schnell erhitzt und wieder abgekühlt werden kann, und zwar insbesondere aufgrund eines hohen Stroms und einer vernachlässigbaren thermischen Masse. Durch die leitfähige Zubereitung kann insbesondere eine sehr schnelle Erhitzung von zumindest Bestandteilen der Vorrichtung erzielt werden. Die Verwendung einer leitfähigen Zubereitung gestattet insbesondere, wie im weiteren Verlauf der Beschreibung noch näher erläutert wird, die Realisation einer virtuell masselosen Heizeinrichtung, die insbesondere dreistellige Temperaturgradienten in kürzester Zeit, insbesondere in wenigen Sekunden, überwinden kann.
Dabei ist die Erfindung nicht auf bestimmte Ausgestaltungen und Formen der beheizbaren Vorrichtung, insbesondere des Vorrichtungskörpers, etwa der Einrichtung zur zumindest zeitweiligen Aufnahme eines Mediums, beschränkt. Beispielsweise kann der Vorrichtungskörper, etwa die Aufnahmeeinrichtung, als eine einteilige oder mehrteilige Form und/oder als ein einteiliges und/oder mehrteiliges Werkzeug und/oder als ein Behältnis zur zumindest zeitweiligen Aufnahme eines Mediums ausgebildet sein. Eine solche Einrichtung wird im Bereich der Spritzgusstechnik eingesetzt

Auch können beliebige Medien erhitzt werden, so dass die Erfindung nicht auf bestimmte Medien beschränkt ist. Beispielsweise kann es sich bei dem Medium um Kunststoff handeln.
Die vorliegende Erfindung kann insbesondere überall dort zum Einsatz kommen, wo in kurzer Zeit große Temperaturunterschiede überbrückt werden müssen.
Die leitfähige Zubereitung ist insbesondere innig mit der beheizbaren Vorrichtung verbunden. Dadurch ist die leitfähige Zubereitung, insbesondere an den Grenzflächen, an der beheizbaren Vorrichtung thermisch sehr gut angebunden.
Die leitfähige Zubereitung ist zumindest bereichsweise an der beheizbaren Vorrichtung vorgesehen. Das bedeutet insbesondere, dass die Vorrichtung zumindest lokal oder partiell oder in bestimmten Abschnitten oder in bestimmten Bereichen eine solche leitfähige Zubereitung aufweist. Insbesondere weist wenigstens ein insbesondere räumlich begrenzter Bereich der Vorrichtung eine leitfähige Zubereitung auf. Es ist aber auch möglich, dass zwei oder mehr räumlich begrenzte Bereiche der Vorrichtung eine leitfähige Zubereitung aufweisen. Diese räumlich begrenzten Bereiche sind bevorzugt beabstandet und unabhängig zueinander, so dass jeder Bereich individuell und unabhängig von den anderen Bereichen betrieben werden kann. Dadurch wird es möglich, dass partielle Bereiche der Vorrichtung sehr schnell erwärmt werden können.

Insbesondere ist die leitfähige Zubereitung an der beheizbaren Vorrichtung angeordnet oder an dieser ausgebildet. Beispielsweise kann die leitfähige Zubereitung in dem Bereich, in dem eine Erhitzung erforderlich ist, von außen auf die Vorrichtung, insbesondere auf den Vorrichtungskörper, etwa die Einrichtung zur zumindest zeitweiligen Aufnahme eines Mediums, aufgetragen werden oder auf dieser aufgetragen sein. Damit kann ein sehr feines, genaues Erhitzungsmuster erzielt werden. Die leitfähige Zubereitung hat zudem den Vorteil, dass hierdurch eine - thermisch - quasi masselose Heizeinrichtung realisiert werden kann.

Die Menge der leitfähigen Zubereitung und/oder die Dicke der aufgebrachten leitfähigen Zubereitung hängen insbesondere von der Art der Prozessführung, dem Material der Vorrichtung oder des Vorrichtungskörpers, der Art des in der Aufnahmeeinrichtung befindlichen Mediums, der erforderlichen Leistung/Flächeneinheit und dergleichen ab. In einer bevorzugten Ausführungsform ist/wird die leitfähige Zubereitung mit einer Schichtdicke von kleiner 1 mm auf der beheizbaren Vorrichtung ausgetragen oder ausgebildet. Beispielsweise kann die leitfähige Zubereitung eine Dicke von 0,1 mm aufweisen.

Beispielsweise ist es denkbar, dass durch die vorliegende Erfindung eine Erhitzung des Mediums im Bereich zwischen Raumtemperatur und 100°C erfolgen kann, wobei durch die Verwendung der leitfähigen Zubereitung partiell bis zu 300°C realisiert werden können. In Zusammenhang mit einem konkreten Beispiel, das selbstverständlich nicht beschränkend zu verstehen ist, kann zunächst das Medium durch Aufschmelzen, beispielsweise bei 200°C, plastifiziert und in die Spritzgussform gespritzt werden, die konventionell, beispielsweise durch Wasser oder Thermoöl oder andere Weise auf eine Arbeitstemperatur von beispielsweise 80°C erwärmt wird. Daraus ergibt sich eine Temperaturdifferenz zwischen Werkzeug und Medium von 120°C und ein entsprechender Temperaturgradient im Medium während des Spritzgießvorgangs. Dieses ΔT wird lokal kurzzeitig durch eine leitfähige Zubereitung, die beispielsweise eine Heizbeschichtung sein kann, an den entsprechenden Stellen herabgesetzt.
Gemäß der vorliegenden Erfindung ist die leitfähige Zubereitung in besonderer Weise ausgebildet. Die leitfähige Zubereitung zeichnet sich dadurch aus, dass diese wenigstens ein Kohlenstoffmaterial aufweist. Dabei ist die Erfindung nicht auf bestimmte Typen von Kohlenstoffmaterial oder Mischungen verschiedener Kohlenstoffmaterialien beschränkt. Bevorzugte, jedoch nicht ausschließliche Beispiele hierzu werden im weiteren Verlauf der Beschreibung näher erläutert. Das Kohlenstoffmaterial kann sich in einer ersten Phase befinden. Auch dies kann auf unterschiedliche Weise realisiert werden. Bevorzugte, jedoch nicht ausschließliche Beispiele hierzu werden im weiteren Verlauf der Beschreibung näher erläutert.

Dabei weist die leitfähige Zubereitung eine erste Phase sowie wenigstens zwei in der ersten Phase vorgesehene Leitfähigkeitsadditive auf. Insbesondere kann/können das erste und/oder zweite Leitfähigkeitsadditiv auf Kohlenstoffbasis und/oder als Kohlenstoffmaterial ausgebildet sein.

Vorzugsweise ist auf der beheizbaren Vorrichtung eine leitfähige Zubereitung, insbesondere eine elektrisch und/oder thermisch leitfähige Zubereitung, aufgebracht, aufweisend eine erste, zumindest zeitweilig flüssige Phase sowie wenigstens ein in der ersten Phase vorgesehenes Leitfähigkeitsadditiv.

Dabei spielt es keine Rolle, wann die erste Phase im flüssigen Zustand vorliegt. Dies kann während des gesamten Herstellungs- und Verarbeitungsprozesses oder aber bei einem oder mehreren Prozessschritten der Fall sein, beispielsweise während eines Mischvorgangs oder während der Applizierung. Somit sind auch Pulverbeschichtungen und dergleichen inbegriffen.

Der Begriff flüssig soll hierbei insbesondere im physikalischen Sinne verstanden werden, so dass selbstverständlich auch viskose und/oder nicht newtonsche Flüssigkeiten sowie Schmelzen und dergleichen inbegriffen sind.

Bevorzugt ist insbesondere eine erfindungsgemäße leitfähige Zubereitung, insbesondere eine elektrisch und/oder thermisch leitfähige Zubereitung, erhältlich durch
A) Bereitstellen einer ersten zumindest zeitweilig flüssigen Phase;
B) Zugeben wenigstens eines Leitfähigkeitsadditivs, vorzugsweise von wenigstens zwei Leitfähigkeitsadditiven in die erste Phase;
C) Vermengen der ersten Phase und des wenigstens einen Leitfähigkeitsadditivs in einen homogenen Zustand.

Dabei sind beliebige Mischreihenfolgen möglich. Es können also beispielsweise zunächst ein Additiv allein oder zwei oder mehrere vorgemischte Additive mit der ersten, zumindest zeitweilig flüssigen Phase vermengt werden. Weitere Additive können danach beigemischt werden, ohne dass dies für die Erfindung zwingend notwendig ist.

Eine solche leitfähige Zubereitung kann auf vielfältigste Weise eingesetzt werden. Vorteilhaft kann eine solche Zubereitung als beheizbare Beschichtung beziehungsweise in beheizbaren Beschichtungen, insbesondere in einer beheizbaren Form oder in beheizbaren Werkzeugen, und dergleichen eingesetzt werden. Natürlich ist die Erfindung nicht auf diese genannten Beispiele beschränkt. Einige weitere vorteilhafte, jedoch nicht ausschließliche Anwendungsmöglichkeiten sind im weiteren Verlauf der Beschreibung genannt.

Vorteilhaft kann in der ersten Phase zumindest ein weiteres Leitfähigkeitsadditiv vorgesehen sein.

Vorzugsweise kann/können das erste und/oder zweite Leitfähigkeitsadditiv auf Kohlenstoffbasis und/oder als Kohlenstoffmaterial ausgebildet sein. Dabei ist die Erfindung nicht auf bestimmte Materialien beschränkt. Einige vorteilhafte, jedoch nicht ausschließliche Beispiele werden im weiteren Verlauf der Beschreibung näher erläutert.

Bevorzugt kann die leitfähige Zubereitung wenigstens einen Binder und/oder wenigstens ein weiteres Additiv aufweisen. Ein Binder ist generell ein Bindemittel, das Stoffe und Materialien zusammenhält. Die Erfindung ist nicht auf bestimmte Bindermaterialien, die vorteilhaft organisch oder anorganisch ausgebildet sein können, beschränkt. Je nach Ausgestaltung können auch noch weitere Additive zugemischt sein, wobei auch diesbezüglich die Erfindung nicht auf bestimmte Additive beschränkt ist. Einige vorteilhafte, jedoch nicht ausschließliche Beispiele für Binder und Additive sind im weiteren Verlauf der Beschreibung genannt.

Wie weiter oben schon erwähnt wurde, kann der Vorrichtungskörper, etwa die Einrichtung zur zumindest zeitweiligen Aufnahme eines Mediums, bevorzugt als eine einteilige oder mehrteilige Form und/oder als ein einteiliges oder mehrteiliges Werkzeug ausgebildet sein.

Die beheizbare Vorrichtung ist als Spritzgießvorrichtung ausgebildet In einem solchen Fall kann die Erfindung beispielsweise im Bereich des Duroplastspritzgusses Anwendung finden. Beispielsweise kann die beheizbare Vorrichtung in einem solchen Fall eingesetzt werden, um Heißkanaldüsen und/oder Plastifizierzylinder und/oder Thermoumformwerkzeuge aufzuheizen.

Auch kann die vorliegende Erfindung im Zusammenhang mit einem Variotherm-Verfahren im Thermoplastspritzguss eingesetzt werden.

Bevorzugt ist die leitfähige Zubereitung als Beschichtung ausgebildet, wobei die Vorrichtung, insbesondere der Vorrichtungskörper, etwa die Einrichtung zur zumindest zeitweiligen Aufnahme eines Mediums, zumindest bereichsweise mit der leitfähigen Zubereitung beschichtet ist. Beispielsweise kann die Beschichtung ein Lack sein. Mit der Beschichtung kann vorteilhaft ein Substrat überzogen werden. Der Lack kann dann die äußerste Beschichtung des Substrats darstellen, wobei unter dem Lack bereits weitere Beschichtungen aufgebracht sein können. Natürlich ist es auch denkbar, dass der Lack als eine Art Grundierung fungiert. Das bedeutet, dass auf dem die leitfähige Zubereitung darstellenden Lack, der auf dem Substrat aufgetragen ist, noch weitere Schichten, zum Beispiel weitere Lackschichten, Schutzschichten oder dergleichen aufgetragen werden können. Ein die erfindungsgemäße Zubereitung enthaltendes Produkt kann beispielsweise eine oder mehrere Beschichtungen aufweisen, wobei die erfindungsgemäße Beschichtung die unterste, die oberste oder eine zwischen anderen Schichten liegende Beschichtung sein kann.

Liegt die leitfähige Zubereitung als Beschichtung vor, kann diese flächig an der/den gewünschten Stelle(n) der beheizbaren Vorrichtung aufgetragen oder ausgebildet sein/werden.

Bevorzugt ist vorgesehen, dass die leitfähige Zubereitung an mehreren Stellen der beheizbaren Vorrichtung vorgesehen ist, wobei an den betreffenden Stellen durch die leitfähige Zubereitung eine gezielte und örtlich begrenzte Erhitzung ermöglicht wird. Die leitfähige Zubereitung ist somit partiell beziehungsweise lokal an der beheizbaren Vorrichtung vorgesehen, so dass eine partielle Erhitzung der Vorrichtung ermöglicht wird.

Insbesondere kann eine beheizbare Vorrichtung in Form einer Beschichtung als Heizbeschichtung zur Temperierung einer Spritzgießvorrichtung, insbesondere eines Spritzgießwerkzeugs, verwendet werden.

Bevorzugt kann die Vorrichtung, insbesondere der Vorrichtungsköroper, etwa die Einrichtung zur zumindest zeitweiligen Aufnahme eines Mediums, auf wenigstens einer Oberfläche mit der leitfähigen Zubereitung beschichtet sein. Beispielsweise kann vorgesehen sein, dass die leitfähige Zubereitung von außen an der beheizbaren Vorrichtung, insbesondere an dem Vorrichtungskörper, etwa an der Einrichtung zur zumindest zeitweiligen Aufnahme eines Mediums, angeordnet ist. Dabei kann die leitfähige Zubereitung beispielsweise flächig auf einer Oberfläche aufgetragen sein. Beispielsweise kann die leitfähige Zubereitung auch in von außen zugänglichen Ausnehmungen, Vertiefungen und der gleichen vorgesehen sein.

Natürlich kann die leitfähige Zubereitung auch innerhalb der Vorrichtung, insbesondere des Vorrichtungskörpers, etwa der Aufnahmeeinrichtung, beispielsweise an einer Innenwand, angeordnet sein. Denkbar ist beispielsweise, dass die leitfähige Zubereitung an der äußeren Oberfläche und/oder an der inneren Oberfläche der Wandung der Vorrichtung, insbesondere des Vorrichtungskörpers, etwa der Aufnahmeeinrichtung, vorgesehen ist. Handelt es sich hierbei um ein Werkzeug oder eine Form, kann die leitfähige Zubereitung beispielsweise auf dessen/deren Außenwand und/oder in der Form oder dem Werkzeug, beispielsweise innerhalb der Form oder des Werkzeugs auf den formgebenden Oberflächen, vorgesehen sein.

In weiterer Ausgestaltung kann die leitfähige Zubereitung innerhalb der Vorrichtung angeordnet oder ausgebildet sein.

Beispielsweise kann vorgesehen sein, dass die leitfähige Zubereitung flächig ausgebildet ist, und dass diese flächige leitfähige Zubereitung innerhalb der Vorrichtung, beispielsweise innerhalb einer Wand des Vorrichtungskörpers, etwa der Einrichtung zur zumindest zeitweiligen Aufnahme eines Mediums, etwa einer Formwand, Werkzeugwand oder dergleichen, angeordnet oder ausgebildet ist. Beispielsweise kann sich die leitfähige Zubereitung, bei der es sich dann um eine Art Heizbeschichtung handelt, flächig knapp unterhalb einer formgebenden Oberfläche, etwa einer Kavität, befinden. Ein Aufheizen kann dabei rasch und gleichmäßig erfolgen.

In anderer Ausgestaltung kann vorgesehen sein, dass die Vorrichtung wenigstens einen Kanal aufweist und dass die leitfähige Zubereitung an und/oder in wenigstens einem Kanal angeordnet oder ausgebildet ist. Beispielsweise kann die leitfähige Zubereitung innerhalb und/oder außerhalb eines Kanals vorgesehen sein. Beispielsweise kann in einem solchen Fall vorgesehen sein, dass der Kanal, insbesondere eine Kanalwand, außen und/oder innen zumindest teilweise mit einer leitfähigen Zubereitung beschichtet ist. Beispielsweise kann eine teilweise Beschichtung derart realisiert sein, dass der Beschichtungsbereich mit der leitfähigen Zubereitung in Richtung einer Oberfläche, welche mit einem zu erhitzenden Medium in Kontakt kommt, gerichtet ist. In anderer Ausgestaltung kann vorgesehen sein, dass ein solcher Kanal zumindest teilweise mit einer leitfähigen Zubereitung ausgefüllt ist. Beispielsweise kann es sich bei einem solchen Kanal um einen Temperierkanal handeln mit dem die Einrichtung zur Aufnahme eines Mediums und/oder das darin befindliche Medium temperiert werden. Der Temperierkanal kann auch ausgebildet sein, um von einem Medium durchströmt zu werden. Beispielsweise kann es sich bei einem solchen Medium um ein Kühlmedium handeln. Während einer Erhitzungsphase wird bevorzugt die leitfähige Zubereitung in einem solchen Kanal aktiviert und betätigt. In diesem Fall kann vorgesehen sein, dass sich kein Kühlmedium in dem Kanal befindet. Nach Beendigung der Heizphase kann der Kanal dann von einem solchen Kühlmedium durchströmt werden. Dabei ist die vorliegende Erfindung nicht auf eine bestimmte Anzahl und Kontur solcher Kanäle beschränkt. Derartige Temperierkanäle werden im weiteren Verlauf der Beschreibung noch näher erläutert. In anderer Ausgestaltung kann es sich bei einem Kanal um einen Kanal handeln, über den Medium, etwa ein Kunststoff, einer Aufnahmeeinrichtung, etwa einer Form oder einem Werkzeug, zugeführt wird. Oft ist das Medium in diesen Kanälen flüssig und ein jegliches Erstarren ist auf jeden Fall unerwünscht.

In weiterer Ausgestaltung kann die leitfähige Zubereitung elektrische Kontakte oder Mittel zum Anbringen von elektrischen Kontakten aufweisen. Bei den elektrischen Kontakten kann es sich beispielsweise um Elektroden, etwa Kontaktstreifen, handeln. Über die elektrischen Kontakte erfolgt eine Bestromung der leitfähigen Zubereitung, wodurch sich diese beispielsweise erhitzt. Insbesondere kann vorgesehen sein, dass die elektrischen Kontakte für eine seitliche Bestromung ausgebildet und/oder an der leitfähigen Zubereitung angeordnet sind. Handelt es sich bei der leitfähigen Zubereitung um eine dünne Schicht, kann beispielsweise eine horizontale Bestromung vorgesehen sein, bei der sich beide elektrischen Kontakte auf derselben Oberfläche der leitfähigen Zubereitung befinden. Bei dickeren Schichten leitfähiger Zubereitungen kann beispielsweise auch eine vertikale Bestromung erfolgen, bei der sich beide Kontakte auf unterschiedlichen Oberflächen der leitfähigen Zubereitung befinden.

Die Erfindung ist weder auf bestimmte Bauformen der elektrischen Kontakte, noch auf eine bestimmte Art der Befestigung der elektrischen Kontakte beschränkt. Beispielsweise können die elektrischen Kontakte mechanisch befestigt werden. Denkbar ist beispielsweise, dass die elektrischen Kontakte mittels Schrauben, Nieten, Verkleben, Verlöten, Verschweißen oder dergleichen befestigt werden.

Vorteilhaft kann die leitfähige Zubereitung als Heizelement, oder als Bestandteil eines Heizelements oder für ein Heizelement ausgebildet sein. Im ersten Fall stellt die leitfähige Zubereitung selbst das Heizelement dar. Im letztgenannten Fall ist die leitfähige Zubereitung ein Bestandteil eines Heizelements, etwa das im Heizelement vorgesehene Element zur Erzeugung der Wärme.

Bevorzugt kann die leitfähige Zubereitung nach außen mit einer isolierenden Schicht, insbesondere einer thermisch und/oder elektrisch isolierenden Schicht, abgedeckt sein, und/oder eine Oberfläche, die mit einer leitfähigen Zubereitung beschichtet wird oder ist, ist oder wird mit einer isolierenden Beschichtung versehen. Bevorzugt kann die leitfähige Zubereitung nach außen mit einer isolierenden Schicht, insbesondere einer thermisch und/oder elektrisch isolierenden Schicht, abgedeckt sein. Eine solche Isolierung ist insbesondere dann von Vorteil beziehungsweise erforderlich, wenn die leitfähige Zubereitung elektrisch bestromt wird. In weiterer Ausgestaltung kann vorgesehen sein, dass eine isolierende Beschichtung von Oberflächen, insbesondere von metallischen Oberflächen vorgesehen ist, die mit einer leitfähigen Zubereitung, beispielsweise eine Heizbeschichtung, versehen sind oder versehen werden sollen. Die leitfähige Zubereitung kann alternativ oder zusätzlich mit einer metallischen Schicht zur Realisierung einer Erodierstruktur, einer Ledernarbe oder anderer Werkzeugoberflächen überzogen sein. Eine solche metallische Schicht kann durch eine Galvanik-, PVD-Beschichtung und dergleichen aufgetragen werden.

Vorzugsweise kann die leitfähige Zubereitung auf einem Substrat aufgetragen oder als auf ein Substrat aufbringbar ausgebildet sein. Beim Substrat ist die Erfindung nicht auf bestimmte Formen oder Stoffe beschränkt. Beispielsweise sind glatte oder raue Untergründe möglich, die beispielsweise durch eines der weiter unten beschriebenen Verfahren beschichtet werden können. Dabei kann bei Bedarf beispielsweise ein Haftvermittler zum Einsatz kommen. Ebenso können beispielsweise alle Arten von Textilien und Fasern als Substrat dienen, beispielsweise Gewebe, Vliese, Fäden, Natur- und Kunstfasern und dergleichen.

Beispielsweise kann die leitfähige Zubereitung auf einem klebefähigen Substrat aufgebracht oder in einem solchen Substrat ausgebildet sein, so dass die leitfähige Zubereitung als ein Klebeelement, beispielsweise in Form eines Tapes, auf der Vorrichtung aufgebracht, beziehungsweise aufgeklebt werden kann.

Eine erfindungsgemäße beheizbare Vorrichtung kann für verschiedenste Zwecke eingesetzt und verwendet werden. Generell kann die Vorrichtung überall dort eingesetzt werden, wo etwas, insbesondere partiell oder bereichsweise und/oder temporär vorgewärmt oder beheizt werden muss. Die leitfähige Zubereitung ist deshalb zumindest bereichsweise zur partiellen oder bereichsweisen und/oder temporären Erhitzung der beheizbaren Vorrichtung angeordnet und/oder ausgebildet.

Dabei kann eine Anwendung sowohl im Innenbereich als auch im Außenbereich vorgesehen sein. Eine entsprechende leitfähige Zubereitung, beispielsweise ein Lack, kann als Bestandteil von Substraten vorgesehen sein. Dabei kann die Zubereitung als Beschichtung auf dem Substrat, aber auch als Materialkomponente innerhalb des Substrats vorgesehen sein.

Bevorzugt kann die leitfähige Zubereitung von außen auf der beheizbaren Vorrichtung, insbesondere von außen auf einer Einrichtung zur zumindest zeitweiligen Aufnahme eines Mediums, beispielsweise einer Form oder einem Werkzeug, aufgetragen werden oder sein.

Vorzugsweise ist eine leitfähige Zubereitung vorgesehen, die zumindest bereichsweise auf einer beheizbaren Vorrichtung, insbesondere auf einem Vorrichtungskörper, etwa einer entsprechenden Aufnahmeeinrichtung, aufgebracht oder darin ausgebildet ist und die mit elektrischen Kontakten versehen ist, über die eine elektrische Spannung an die leitfähige Zubereitung angelegt werden kann. Über den durch die Zubereitung fließenden elektrischen Strom kann die leitfähige Zubereitung dann in gewünschter Weise beheizt werden. Beispielsweise kann durch Auswahl und/oder Anordnung der elektrischen Kontakte erreicht werden, dass ein seitlicher, lateraler Stromfluss in x- und γ-Richtung der leitfähigen Zubereitung, das heißt in Richtung der Ebene der leitfähigen Zubereitung, etwa parallel zu einer Oberfläche der Vorrichtung und erreicht wird. Natürlich ist auch denkbar, dass ein senkrechter Stromfluss in Z-Richtung, dass heißt senkrecht zur Ebene der leitfähigen Zubereitung, etwa in die Vorrichtung hinein, realisiert wird.

Die leitfähige Zubereitung, ist eine Kunststoffzubereitung, die vorzugsweise; in der vorstehend beschriebenen erfindungsgemäßen Weise ausgebildet ist und die gekennzeichnet ist durch wenigstens ein Grundmaterial aus Kunststoff sowie wenigstens zwei zugemischte Additive, von denen jedes als Leitfähigkeitsadditiv ausgebildet ist. Bei dem Grundmaterial handelt es sich um eine wie weiter oben bereits erwähnte erste Phase. Bevorzugt ist insbesondere eine wie vorstehend beschriebene erfindungsgemäße leitfähige Zubereitung, insbesondere eine Kunststoffzubereitung, erhältlich dadurch, dass wenigstens einem Grundmaterial, insbesondere einem Kunststoffmaterial, wenigstens zwei Additive zugegeben werden, wobei wenigstens ein Additiv als Leitfähigkeitsadditiv ausgebildet ist, und wobei die Einzelkomponenten zu einer Zubereitung, insbesondere einer Kunststoffzubereitung, vermischt werden.

Eine entsprechende leitfähige Zubereitung, insbesondere eine elektrisch und/oder thermisch leitfähige Zubereitung, insbesondere eine wie vorstehend beschriebene leitfähige Zubereitung, kann durch ein Verfahren bereitgestellt werden, das durch folgende Schritte gekennzeichnet ist:
A) Bereitstellen einer ersten zumindest zeitweilig flüssigen Phase;
B) Zugeben wenigstens eines Leitfähigkeitsadditivs, vorzugsweise von wenigstens zwei Leitfähigkeitsadditiven in die erste Phase;
C) Vermengen der ersten Phase und des wenigstens einen Leitfähigkeitsadditivs in einen homogenen Zustand.

Dabei sind beliebige Mischreihenfolgen möglich. Es können also beispielsweise zunächst ein Additiv allein oder zwei oder mehrere vorgemischte Additive mit der ersten, zumindest zeitweilig flüssigen Phase vermengt werden. Weitere Additive können danach beigemischt werden, ohne dass dies für die Erfindung zwingend notwendig ist.

Bevorzugt kann auf diese Weise eine Mischung für eine leitfähige, insbesondere elektrisch leitfähige, und/oder beheizbare Beschichtung, beispielsweise in Form eines Lacks, hergestellt werden.

Zunächst kommt eine erste Phase zum Einsatz, die dadurch gekennzeichnet ist, dass sie zumindest zeitweilig flüssig ist. Dabei ist die Erfindung nicht auf bestimmte Phasen beschränkt. Beispielsweise kann die Phase auf wässriger Basis, beispielsweise in Form von Wasser, ausgebildet sein. Natürlich sind auch andere Typen von Phasen möglich, beispielsweise Phasen auf Kunststoffbasis, die beispielsweise wässrig, lösemittelbasiert oder dergleichen ausgebildet sein können. Auch kann die erste Phase in Form eines Harzes oder dergleichen ausgebildet sein. Natürlich sind auch Kombinationen aus den genannten Beispielen möglich. Die genannten Beispiele sind rein exemplarischer Natur und stellen keine ausschließliche Aufzählung dar, so dass die Erfindung nicht auf die genannten Beispiele beschränkt ist.

Der ersten Phase wird wenigstens ein Leitfähigkeitsadditiv zugegeben. Optional kann wenigstens ein weiteres Leitfähigkeitsadditiv zugegeben werden. Nicht ausschließliche Beispiele für derartige Leitfähigkeitsadditive sind weiter oben schon genannt worden und werden auch im weiteren Verlauf der Beschreibung noch in größerem Detail beschrieben.

Vorzugsweise kann wenigstens ein Binder und/oder wenigstens ein weiteres Additiv zugegebenen werden.

Vorteilhaft kann die leitfähige Zubereitung auf ein Substrat aufgebracht werden.

Bevorzugt wird durch das Verfahren eine leitfähige Zubereitung in Form einer Beschichtung, beispielsweise in Form eines Lacks, hergestellt.

Zunächst kann vorgesehen sein, dass eine Lösung hergestellt wird, in die dann die vorgenannten Füllstoffe in Form von Leitfähigkeitsadditiv(en) und/oder Binder und/oder weiteren Additiven zugegeben werden. Ist die erste Phase ein Kunststoff, kann es erforderlich sein, dass der Kunststoff zunächst aufgelöst wird. Dann wird ein Gemenge oder eine Mischung hergestellt, das/die einen homogenen Zustand hat. Möglicherweise kann hier durch weitere Additive eine weitergehende Verdünnung realisiert werden.

Die daraus entstehende leitfähige Zubereitung kann auf unterschiedliche Weise auf ein Substrat aufgetragen werden, beispielsweise mittels Rakeln, Sprühen, Pinseln, Rollen, Eintauchen, Tränken, Streichen, Spachteln und dergleichen, oder auch in einem direkten oder indirekten Druckverfahren, beispielsweise im Siebdruck, im Maskendruck, Tampondruck, Tiefdruck und dergleichen. Bevorzugt kann die leitfähige Zubereitung auch durch Spritzguss verarbeitet werden (Kontaktierung durch MID-Verfahren: Einspritzen von im Werkzeug eingelegten Kontakten).

Die Herstellung von Heizelementen, die bevorzugt horizontal/vertikal bestromt werden, kann durch Spritzguss erfolgen. Die Herstellung von beheizbaren Teilen kann beispielsweise auch durch "inmold labeling" erfolgen. Dabei wird eine vorgefertigte Heizschicht in das Spritzgusswerkzeug eingelegt und hinterspritzt.

Bevorzugt ist weiterhin ein Verfahren zur Herstellung einer leitfähigen Zubereitung, insbesondere einer Kunststoffzubereitung, insbesondere einer wie vorstehend beschriebenen erfindungsgemäßen Zubereitung, wobei das Verfahren vorzugsweise in der wie vorstehend beschriebenen erfindungsgemäßen Weise durchgeführt wird, wobei das Verfahren dadurch gekennzeichnet ist, dass wenigstens einem Grundmaterial, insbesondere einem Kunststoffmaterial, wenigstens zwei Additive zugegeben werden, wobei wenigstens ein Additiv vorzugsweise als Leitfähigkeitsadditiv ausgebildet ist, und wobei die Einzelkomponenten zu einer Zubereitung, insbesondere einer Kunststoffzubereitung, vermischt werden.

Bevorzugt ist weiterhin auch ein Verfahren zur Herstellung einer leitfähigen Zubereitung, insbesondere einer Kunststoffzubereitung, insbesondere einer wie vorstehend beschriebenen erfindungsgemäßen Zubereitung, wobei das Verfahren vorzugsweise in der wie vorstehend beschriebenen erfindungsgemäßen Weise durchgeführt wird, wobei das Verfahren dadurch gekennzeichnet ist, dass ein erstes Additiv, insbesondere ein Leitfähigkeitsadditiv, bevorzugt auf Kohlenstoffbasis oder in Form eines Kohlenstoffmaterials, mit einem Grundmaterial, insbesondere einem Kunststoffmaterial, vermischt wird, dass ein zweites Additiv, insbesondere ein Leitfähigkeitsadditiv, bevorzugt auf Kohlenstoffbasis oder in Form eines Kohlenstoffmaterials, mit einem Grundmaterial, insbesondere einem Kunststoffmaterial vermischt wird und dass die beiden Teilmischungen zu einer Zubereitung, insbesondere einer Kunststoffzubereitung, vermischt werden.

Vorteilhaft wird/werden dem Grundmaterial und/oder der Zubereitung wenigstens ein weiteres Material und/oder wenigstens ein weiterer Stoff zugemischt.

Die leitfähigen Zubereitungen können vorteilhaft thermisch und/oder elektrisch leitend ausgebildet sein. Bevorzugt ist vorgesehen, dass die Zubereitung elektrisch leitend ausgebildet ist. Eine derartige Zubereitung ist durch die Verwendung des wenigstens einen Leitfähigkeitsadditivs niederohmig, was zu einer guten elektrischen Leitfähigkeit führt, da beispielsweise nur ein geringer elektrischer Widerstand vorhanden ist. Dadurch kann eine homogene Beheizbarkeit realisiert werden. Durch die Niederohmigkeit ist zudem gewährleistet, dass an die Zubereitung nur geringe Spannungen angelegt werden müssen, um eine gute Beheizung zu erreichen.

Der ohmsche Widerstand der Heizschicht steht in keinem Zusammenhang mit der Homogenität der Wärmeerzeugung. Ein niedriger Widerstand (= hohe Leitfähigkeit) bestimmt den Strom und damit die Leistung, die bei einer gegebenen Spannung erzeugt wird. Ein hoher Leitwert ist bei horizontal bestromten Schichten wichtig, da hier die Distanz zwischen den Kontakten in der Regel groß ist. Heizschichten, die vertikal bestromt werden, können daher deutlich niederohmiger sein (vertikaler Kontaktabstand typisch < 2 mm).
Hohe Leitwerte sind dann entscheidend, wenn es gilt, große Temperaturdifferenzen in kürzester Zeit zu überwinden, d.h. mit großen Strömen hohe Leistungen zu erzeugen (z.B. 50 W/cm²).
Die vorteilhafte Ausgestaltung der einzelnen Erfindungsaspekte wird nachfolgend noch vertiefend beschrieben.
Bevorzugt weist die leitfähige Zubereitung eine erste Phase auf, die zumindest zeitweilig flüssig sein kann.
Bei dieser ersten Phase handelt es sich um das Grundmaterial. In dem Grundmaterial befinden sich wenigstens ein, vorzugsweise wenigstens zwei Leitfähigkeitsadditive. Hierbei handelt es sich um Additive, die die thermische und/oder elektrische Leitfähigkeit der leitfähigen Zubereitung beeinflussen, insbesondere verbessern. Wenigstens eines dieser Leitfähigkeitsadditive ist als Kohlenstoffmaterial ausgebildet oder weist ein Kohlenstoffmaterial auf.

Vorteilhaft betrifft die Erfindung, wobei die erste Phase oder das Grundmaterial aus Kunststoffbasis ausgebildet ist, leitfähige Zubereitungen in Form von elektrisch und/oder thermisch leitfähigen Polymeren. Die vorliegende Erfindung stellt als leitfähige Zubereitungen insbesondere Polymer-Zubereitungen mit herausragender elektrischer/thermischer Leitfähigkeit und geringer Viskosität zur Verfügung. Natürlich sind auch andere Kunststoffe möglich.

Die Erfindung umfasst als Grundmaterial oder erste Phase insbesondere alle Arten von Polymeren (insbesondere Reaktivharze und die entsprechenden Härter und Beschleuniger, thermoplastische Polymere und Elastomere), wie auch Kohlenstoffteilchen unterschiedlicher Morphologie, Verarbeitung und Konditionierung, wie auch Metallteilchen unterschiedlicher Morphologie, Verarbeitung und Konditionierung, wie auch Keramikteilchen unterschiedlicher Morphologie, Verarbeitung und Konditionierung, sowie andere Leitfähigkeitsadditive.

Ferner betrifft die Erfindung nicht ein Verfahren zur Herstellung einer leitfähigen Zubereitung, insbesondere einer Polymer-Zubereitung, wobei diese neben dem Grundmaterial, beispielsweise einem Basispolymer, mindestens zwei Leitfähigkeitsadditive enthalten soll, von denen mindestens eines aus einem Kohlenstoffmaterial besteht oder ein Kohlenstoffmaterial aufweist, sowie die erfindungsgemäß hergestellte Zubereitung und deren Verwendung.

Im Zusammenhang mit der vorliegenden Erfindung können beliebige Bindersysteme zum Einsatz kommen, wie beispielsweise Wasserglas, Zemente und dergleichen.

Die leitfähigen Zubereitungen können, müssen aber nicht zwingend weitere Hilfsstoffe wie Dispergiermittel, Lösungsmittel, Stabilisatoren, etc. enthalten.

Die beheizbare Vorrichtung weist bevorzugt wenigstens ein in der Beschreibung und/oder den Beispielen und/oder den Figuren offenbartes Merkmal auf.

Gemäß einem zweiten Aspekt der Erfindung wird ein Verfahren zur zumindest temporären und/oder bereichsweisen Erhitzung einer Vorrichtung, nach einem der Ansprüche 1 bis 6, insbesondere eines Vorrichtungskörpers, etwa eines Mediums, insbesondere zur Temperierung eines Mediums, welches sich in einer Einrichtung zur zumindest zeitweiligen Aufnahme eines Mediums einer beheizbaren Vorrichtung befindet, bereitgestellt, wobei die Erhitzung der Vorrichtung, etwa des Mediums, mittels einer Heizeinrichtung der beheizbaren Vorrichtung erfolgt. Das Verfahren ist dadurch gekennzeichnet, dass zur Erhitzung der Vorrichtung, etwa des Mediums, die Heizeinrichtung, die als elektrisch und/oder thermisch leitfähige Zubereitung ausgebildet ist, welche wenigstens ein Kohlenstoffmaterial aufweist und zumindest bereichsweise an der beheizbaren Vorrichtung angeordnet und/oder ausgebildet ist, aktiviert wird, wodurch die beheizbare Vorrichtung, insbesondere der Vorrichtungskörper, etwa die Einrichtung zur zumindest zeitweiligen Aufnahme des Mediums und/oder das Medium in der Einrichtung zur zumindest zeitweiligen Aufnahme des Mediums, erhitzt wird.

Bevorzugt weist die leitfähige Zubereitung elektrische Kontakte, insbesondere zur seitlichen Bestromung auf oder ist mit elektrischen Kontakten verbunden, wobei die Betätigung der leitfähigen Zubereitung mittels einer Bestromung der leitfähigen Zubereitung über die elektrischen Kontakte erfolgt.

Insbesondere kann das erfindungsgemäße Verfahren zur Temperierung eines Mediums in einem Spritzgussverfahren durchgeführt werden.

Dabei wird das Verfahren mit einer wie vorstehend beschriebenen erfindungsgemäßen Vorrichtung durchgeführt. Das Verfahren weist bevorzugt wenigstens einen in der Beschreibung und/oder den Beispielen und/oder den Zeichnungen offenbarten Verfahrensschritt auf.

Im Zusammenhang mit der vorliegenden Erfindung können eine ganze Reihe von Materialien und Stoffen Anwendung oder Berücksichtigung finden. Einige vorteilhafte, jedoch nicht ausschließliche Beispiele werden im weiteren Verlauf der Beschreibung näher erläutert:
Die Leitfähigkeitsadditive können vorteilhaft auf Kohlenstoffbasis oder in Form eines Kohlenstoffmaterials ausgebildet sein. Nachfolgend werden einige vorteilhafte, jedoch nicht ausschließliche Beispiele für bevorzugte Leitfähigkeitsadditive beschrieben, die jeweils einzeln, oder aber in jeder beliebigen Kombination zum Einsatz kommen können.

### Graphit

Graphit ist ein sehr häufig vorkommendes Mineral und gehört zur Ordnung der Halbmetalle und Nichtmetalle. Er ist neben Diamant und Fullerenen die dritte unter irdischen Normalbedingungen stabile Form (Modifikation) des Kohlenstoffs und kristallisiert meist im hexagonalen, sehr selten auch im trigonalen Kristallsystem.

Graphit entwickelt undurchsichtige, graue bis schwarze Kristalle in sechseckiger, tafeliger, schuppiger oder stengeliger Form, die auf den Kristallflächen Metallglanz aufweisen.

Im kristallinen Graphit liegen parallel verlaufende ebene Schichten, die "Basalebenen" oder "Graphen-Schichten", vor. Eine Schicht besteht aus kovalent verknüpften Sechsecken, deren Kohlenstoff-Atome sp²-hybridisiert sind. Innerhalb dieser Ebenen beträgt die Bindungsenergie zwischen den Kohlenstoff-Atomen 4.3 eV, zwischen ihnen dagegen lediglich 0.07 eV. Aus dieser extremen Richtungsabhängigkeit der Bindungskräfte resultiert eine deutliche Anisotropie der mechanischen, elektrischen und thermischen Eigenschaften des Graphits:
leichte Spaltbarkeit des reinen Graphits entlang der Basalebenen, deutlich höhere Festigkeit entlang der Kristallschichten;
thermische und elektrische Isolation orthogonal zu den Basalebenen gegenüber einer fast metallischen Leitfähigkeit entlang der Ebenen.

Die Leitfähigkeit innerhalb einer Ebene wird durch die Delokalisation der Pi-Elektronen ermöglicht. Weisen die Ebenen keine feste Korrelation zueinander auf, spricht man von turbostratischem Kohlenstoff.

### Kohlenstoff-Nanotubes

Kohlenstoff-Nanotubes (CNT) bestehen aus zum Zylinder aufgerollten, geschlossenen Graphen-Schichten. Einzelne Röhren nennt man "Single wall carbon nanotubes" (SWCNT), Teilchen aus konzentrisch gestapelten Röhren aufsteigenden Durchmessers werden "multiwall carbon nanotubes" (MWCNT) genannt.

CNT kann man über verschiedene Methoden herstellen. Am bekanntesten sind der Lichtbogenprozess, das Laserablationsverfahren und die katalytisch unterstützte Gasphasenabscheidung (CCVD). Letzteres Verfahren eignet sich zur großtechnischen Produktion von CNT. Hierbei entstehen die CNT aus gasförmigen Kohlenstofflieferanten (Kohlenwasserstoffe, Alkohole, CO, CO₂) auf metallischen, katalytisch aktiven Substraten.

Kommerziell verfügbare SWCNT haben Durchmesser von 0.5 - 4 nm, MWCNT haben Durchmesser zwischen 6 - 100 nm. Die Länge von CNT kann bis zu einigen mm betragen.

Die physikalischen Eigenschaften von CNT entsprechen weitestgehend jenen des Graphits entlang der Basalebenen.

CNT werden heute als mechanische Verstärkung, elektrisch und thermisch leitfähiges Additiv in Polymeren, Keramiken und Metallen eingesetzt. Dazu werden die CNT oft an ihrer Oberfläche chemisch modifiziert, um den Anforderungen einer guten Dispergierbarkeit und Anbindung an die Matrix zu genügen. In der Regel werden die CNT dem Matrixmaterial zugegeben. Aufgrund des hohen Aspektverhältnisses und der hohen spezifischen Oberfläche sind nur Komposite mit verhältnismäßig niedrigem CNT-Gehalt darstellbar.

### Kohlenstoff-Nanofasern

Kohlenstoff-Nanofasern (CNF) bestehen aus Graphenschichten, die entlang der Filamentachse aufeinander gestapelt sind. Der Winkel (die Orientierung) der Graphenebenen bezüglich der Filamentachse wird zur groben Unterscheidung herangezogen. Sogenannte 'Herringbone' CNF besitzen demnach Graphenebenen, die in einem Winkel 90° angeordnet sind. Diese CNF können massiv oder auch hohl sein. Ihre Durchmesser liegen im Bereich 50 nm - 1 m und ihre Längen können bis zu mm betragen. Im Falle, dass die Graphenschichten in einen Winkel =90° zur Filamentachse angeordnet sind, spricht man von 'Platelet' CNF. Ihre Durchmesser liegen im Bereich 50 nm - 500 nm und ihre Längen können bis zu 50 µm betragen.

Diese CNF werden in der Regel über CVD hergestellt. Ihre Anwendungen finden sich vornehmlich in der Katalyse als Katalysatorträger und als aktive Zusatzstoffe in Li-Ionen-Batterien oder bei der Gasspeicherung.

### Ruß

Ruß ist ein schwarzer, pulverförmiger Feststoff, der je nach Qualität und Verwendung zu 80% oder mehr aus Kohlenstoff besteht.

Je nach ihrem Anwendungsgebiet besitzen Ruße spezielle Eigenschaftsprofile, die durch die Art des Herstellverfahrens und durch Variation der Prozessparameter gezielt beeinflusst werden.

Ruße, ihre Eigenschaften, Herstellungsverfahren, Verwendungen und so weiter sind bereits weitreichend beschrieben, so dass an dieser Stelle auf die einschlägige Fachliteratur verwiesen wird.

Die erste Phase beziehungsweise das Grundmaterial kann vorteilhaft auf Kunststoffbasis ausgebildet sein. Nachfolgend werden einige vorteilhafte, jedoch nicht ausschließliche Beispiele für bevorzugte Kunststoffmaterialien beschrieben, die jeweils einzeln oder aber in jeder beliebigen Kombination zum Einsatz kommen können.

### Polymere

Unter Polymeren versteht man chemische Verbindungen, die aus einer oder wenigen Sorten von gleichartigen Einheiten (Monomeren) aufgebaut sind. Solche Moleküle sind meist kettenartig oder verzweigt aufgebaut und weisen kovalente Bindungen zwischen den Monomeren auf.

### Reaktive Kunststoffsysteme

Bei den Grundsubstanzen, den Kunststoffmaterialien, in welche die Additive eingemischt werden, handelt es sich beispielsweise um epoxygruppenhaltige Monomere, - oligomere und Polymere. Sie basieren z.B. auf Bisphenol-A, -F, Novolac und andere. Neben aromatischen handelt es sich weiterhin um aliphatische Derivate. Die Epoxydharze können mono-, di-, tri-, tetra- und mehrfunktionell sein und umfassen alle Molekulargewichte.

Weiterhin handelt es sich um mono- und mehrfunktionelle cycloaliphatische Epoxydharze, wie z.B. 3,4-Epoxycyclohexylmethyl-3,4-epoxycyclohexanecarboxylate, Bis((3,4-epoxy-cyclohexyl)methyl)adipate und andere Derivate höheren oder auch niedrigeren Molekulargewichts.

Eine weitere Gruppe von Basisharzen umfasst Cyanatester und Isocyanate, wie z.B. 2,4-diisocyanato-1-methyl-benzene, 1-isocyanato-4-[(4-isocyanatophenyl) methyl] benzene, 1,1-bis(4-cyanatophenyl)ethan, 2,2-bis(4-cyanatophenyl)propane, oligo(3-methylen-1,5-phenylencyanat) und andere Derivate höheren oder auch niedrigeren Molekulargewichts.

Eine weitere Gruppe von Basisharzen umfasst lineare und verzweigte Diole und mehrfunktionelle Alkohole, Oligo- und Polyester- und Polyether- Polyole aller Molekulargewichte.

Eine weitere Gruppe von Basisharzen umfasst reaktive Polyimidsysteme. Diese können enthalten: monofunktionelle Monomere, wie z.B. N-Phenylmaleimid, 2,6-Xylylmaleimid, N-Cyclohexylmaleimid, etc. und difunktionelle Monomere, wie z.B 4,4'-Diphenylmethanbismaleimid, N,N'-(4-Methyl-m-phenylene)-bismaleimid, N,N'-m-Phenylenebismaleimid, Bisphenol-A Diallylether, o,o'-Diallylbisphenol-A, Polyphenylmethanbismaleimide, Polybenzimidazole, etc.

Eine weitere Gruppe von Basisharzen umfasst Phenolharze, die beispielsweise Novolack oder Resol basiert sind.

Eine weitere Gruppe von Basisharzen umfasst ungesättigte Polyester- und Vinylesterharze.

Eine weitere Gruppe von Basisharzen umfasst Alkydharze. Eine weitere Gruppe von Basisharzen umfasst Melaminharze. Eine weitere Gruppe von Basisharzen umfasst Polysilane und Silikone. Eine weitere Gruppe von Basisharzen umfasst Acrylate. Eine weitere Gruppe von Basisharzen umfasst Polyquionoxaline. Eine weitere Gruppe von Basisharzen umfasst Peche und Bitumen.

Weiterhin enthalten sind Härtersubstanzen und Beschleuniger, wie Amine, Amide, Amidoamine, Aminoalkohole, Aminosäuren, Anhydride, Imidazole, Cyanamide, Alkohole, Phenole, Polyole, Cyanate, Mercaptane, Carbonsäuren, Metallkomplexe etc. in niedrigen, mittleren, wie auch in hohen Molekulargewichten. Weiterhin enthalten sind wässrige und oder lösemittelhaltige Harz- und/oder Härter-Dispersionen.

### Thermoplaste

Bei den Grundsubstanzen handelt es sich z.B. um Polyolefine, wie Polypropylen, Polyethylen, Polybutylen, Polyisobutylen, etc.

Eine weitere Gruppe von Basispolymeren umfasst Polyamide, wie z.B. Polyamid-66, Polyamid-12, Polyamid-11, Polyamid-6, etc.

Weiterhin enthalten sind Polyacryl-Polymere wie Polymethylmethacrylat, Polyacrylnitril, Polyacrylsäure und Derivate, etc.

Eine weitere Gruppe von Basispolymeren umfasst Fluoropolymere, wie Polytetraflouroethylen, Polyvinylidenfluorid, etc.

Eine weitere Gruppe von Basispolymeren umfasst aliphatische und aromatische Polyester, wie z.B. Polyglykole, Polyethylenterephthalat, etc.

Eine weitere Gruppe von Basispolymeren umfasst Polyimide, wie z.B. Polyetherimid.

Eine weitere Gruppe von Basispolymeren umfasst Poly(aryl)etherketone, wie z.B. Polyetherketone, Polyetheretherketone, etc.

Eine weitere Gruppe von Basispolymeren umfasst Polysulfide, wie z.B. Polyphenylensulfid, Polyphenylensulfon, Polysulfon, Polyethersulfon, etc.

Eine weitere Gruppe von Basispolymeren umfasst Polyacetale.

Eine weitere Gruppe von Basispolymeren umfasst Cellulose und Derivate, wie z.B. Nitrate, Acetate, Acetatbutyrate, etc.

Eine weitere Gruppe von Basispolymeren umfasst Vinylpolymere wie z.B. Poyvinylchlorid, Polyvinylacetat, Polyvinylalkohol, Polyvinylbutyral, Polyvinylpyrrolydon, etc.

Weiterhin enthalten sind vorteilhaft wässrige und/oder lösemittelhaltige Thermoplast-Dispersionen.

### Elastomere

Bei den Grundsubstanzen handelt es sich z.B. um Natur-, Isopren-, Butadien-, und andere Kautschuke, die Chlor, Styrol, Nitril, Schwefel, Sauerstoff ethalten können.

Eine weitere Gruppe von Basispolymeren umfasst Silikonelastomere.

Mit der vorliegenden Erfindung können insbesondere elektrisch und thermisch leitfähige Polymer-Zubereitungen bereitgestellt werden.

Aber auch anorganische Systeme können als Grundmaterial beziehungsweise erste Phase der leitfähigen Zubereitung zum Einsatz kommen.

### Anorganische Systeme

Es handelt sich um Stoffe, wie Gips-, Mörtel-, Sand-, Zementzubereitungen, z.B. Beton, und weitere, die durch die Zugabe der oben genannten Additive leitfähig gemacht werden können. Weiterhin handelt es sich um Keramikmaterialien, wie A10, A1N, SiO, SiC, SiN, etc.

Die Zugabe der Leitfähigkeitsadditive erfolgt vorteilhaft in wässriger oder lösemittelhaltiger Phase und unter Zusatz geeigneter organischer und/oder anorganischer Binder.

Eine Sonderstellung nehmen die Systeme ein, die zunächst über eine organische Zwischenstufe erzeugt werden. Beispiele hierfür sind Zubereitungen mit Phenol-, Cyanatesterharzen, Pech, Bitumen, die zu Kohlenstoff umgewandelt werden können, und Polysilane, -siloxane, - silazane, die zu SiO, SiC, SiN, SiCN umgewandelt werden können.

Es wurde herausgefunden, dass unter geeigneten Mischbedingungen in Kunststoffsystemen, beispielsweise in Polymer-Systemen, ein Suspensionszustand von zwei Leitfähigkeitsadditiven, darunter mindestens eines aus Kohlenstoff, (z.B. Graphit und CNT oder Graphit/Ruß und CNT, oder Graphit/Silber und CNT, oder Graphit/AlN und CNT) erzeugt werden kann, der zu einer hervorragenden elektrischen/thermischen Leitfähigkeit führt und die mechanischen und chemischen Eigenschaften der Polymere wesentlich geringer beeinflusst, als dies bei einem herkömmlich gefüllten Polymersystem der Fall ist. Die unter dem Einsatz von erfindungsgemäßen Füllstoffkombinationen hergestellten Polymer-Zubereitungen zeichnen sich durch vergleichsweise geringe Viskositäten aus und sind damit einfacher zu verarbeiten.

Diese Effekte beobachtet man bei Polymeren aller Art: bei Harzen, bei Thermoplasten und bei Elastomeren, und zwar weitestgehend unabhängig vom Verarbeitungsverfahren: synergistisches Wirken von CNT und Graphit miteinander, und/oder mit Ruß, und/oder mit Keramiken, und/oder mit Metallen, etc. bezüglich elektrischer und thermischer Leitfähigkeit.

Die Besonderheit der Erfindung ist, dass die Kombination von herkömmlichen thermisch/elektrisch leitfähigen Partikeln mit CNT und/oder Graphit es ermöglicht, die Einzelkonzentrationen der Komponenten und damit auch die Gesamtkonzentration der Füllstoffe zu reduzieren und damit die Viskosität in geringerem Masse zu beeinflussen.

Die sich einstellenden elektrischen, thermischen, rheologischen Eigenschaften (von Reaktivkomponenten, von Schmelzen, Lösungen, etc.) sind weder mit Graphit noch mit CNT alleine zu erreichen, weshalb es sich hier eindeutig um einen synergistischen Effekt zwischen diesen beiden Partikeln handelt und einem weiteren synergistischen Effekt zwischen dem CNT/Graphit-'Hybrid' und anderen Füllstoffen.

Mittels herkömmlicher Kohlenstoff-Additive ist in unmodifizierten Polymeren unter Zugabe von 5 - 20 gew.-% eine elektrische Leitfähigkeit von etwa 1 mScm⁻¹ erreichbar. Die Verwendung von metallischen Füllstoffen, z.B. Silber, erlaubt es unter Zugabe von 50 - 80 gew.-% in den Bereich 10 kScm⁻¹ vorzudringen. Hier werden Werte 1 mScm⁻¹ bei Zugaben von etwa 30 gew.-% erreicht. Die erreichbaren Wärmeleitfähigkeiten silbergefüllter Systeme liegen im Bereich 1 - 3 W/m.K. Die Verwendung von keramischen Partikeln wie z.B. BN, Al₂O₃, SiO₂, AlN, BN, etc. alleine resultiert im Allgemeinen in Werte für die Wärmeleitfähigkeit in dem Bereich 1 -5 W/m.K. Allerdings sind letztere Systeme nicht elektrisch leitfähig.

Besonders vorteilhaft sind Zubereitungen, bei denen die Grundmaterialien beziehungsweise die ersten Phasen, beispielsweise Polymere, chemisch optimiert und an die jeweiligen Füllstoffe angepasst sind. Die Optimierung sieht eine tatsächliche chemische Veränderung und/oder auch die Abmischung verschiedener Komponenten, beispielsweise Polymer-Komponenten, vor. Ebenfalls besonders vorteilhaft ist die Verwendung von getemperten oder graphitierten CNT/Graphiten. Weitere Vorteile können sich ergeben aus der Verwendung von Gemischen aus verschiedenen Graphiten und/oder der Verwendung von Gemischen aus verschiedenen CNT und/oder der Verwendung von Gemischen aus verschiedenen Metallteilchen und/oder der Verwendung von Gemischen aus verschiedenen Keramikpartikeln sowie aus dem Einsatz anderer Leitfähigkeitsadditive, z.B. Ruß, metallbeschichtete Silikate, etc.

Vorteilhafterweise können den leitfähigen Zubereitungen bei Bedarf weitere Hilfsstoffe zugesetzt werden, etwa in Beschichtungen oder in Gieß- oder Knetmassen. Dies ist allerdings nicht zwingend zur Verbesserung der Leitfähigkeit notwendig und auch nicht in allen Fällen erwünscht.

So beeinflusst die Zugabe von Lösemitteln und/oder Reaktivverdünnern die Viskosität und ist speziell in dünnen Beschichtungen von großer Bedeutung und großem Vorteil.

Die Zugabe von Haftvermittlern, wie z.B. Silane, Titanate oder Zirconate, etc., verbessern die Haftung zwischen Füllstoffen und Matrix und zwischen Zubereitung und Substrat.

Die Viskosität kann mittels rheologischer Additive bis zum erwünschten Wert erhöht werden, um ein Absetzen der CNT und der anderen Additive zu verhindern oder zu verlangsamen, was beispielsweise zu einer Erhöhung der Lagerstabilität führt.

Mechanische Eigenschaften können durch andere Partikel, wie z.B. Talkum, Glimmer, Quarz, etc. weiterhin verbessert oder beeinflusst werden.

### Reaktivharze

Die Erfindung umfasst neben 1-Komponenten-Systemen auch 2-Komponenten und Mehrkomponenten-Systeme. Dies wird in dem Sinne verstanden, dass der Anwender der hier beschriebenen Zubereitungen im Falle von 1K-Systemen Wärme einleiten muss, um eine Vernetzung hervorzurufen, und im Falle von 2K- und Mehrkomponenten-Systemen besagte Komponenten zunächst miteinander vermischen muss, um eine Vernetzung bei RT oder über das Einleiten von Wärme zu erreichen.

### Elastomere

Die Erfindung umfasst jede Art der Darreichungsform.

### Thermoplaste

Die Erfindung umfasst Zubereitungen unterschiedlicher Form, wie z.B. Granulate, Pulver, Dispersionen, Masterbatche, etc.

Die vorliegende Erfindung weist eine Reihe von besonderen Vorteilen auf:
Die Viskosität, beispielsweise von Reaktivharz, Schmelze, Lösung, etc., ist aufgrund der verhältnismäßig geringen Füllstoffanteile nur leicht gegenüber dem Basisharz oder -härter oder der Polymerschmelze, etc. erhöht. Damit sind die Zubereitungen prinzipiell genauso oder ähnlich handzuhaben wie die ungefüllten Polymere. Dies ermöglicht breitere Anwendungsfelder für die jeweiligen Zubereitungen.

Der Einsatz von CNT und Graphit ermöglicht eine erhebliche Kostenersparnis gegenüber herkömmlichen elektrisch leitfähigen Zubereitungen aufgrund der Einsparung an z.B. Ruß, Silber oder AlN.

Die geringe Füllstoffkonzentration erlaubt gegebenenfalls eine Pigmentierung mit herkömmlichen Farbstoffen.

In einer elektrisch/thermisch leitfähigen, auf herkömmlichen Leitfähigkeitsadditiven basierenden Zubereitung ist es grundsätzlich möglich, einen deutlichen Anteil der Additive zu reduzieren und durch einen wesentlich geringeren Anteil an CNT und Graphit zu ersetzen, ohne die entsprechende Leitfähigkeit zu verringern.

Eine Reduktion des Anteils an herkömmlichem Leitfähigkeitsadditiv, wie z.B. Graphit, Ruß, Silber oder AlN um 75%, 50%, 30%, 20% gegenüber dem ursprünglichen Anteil ist durch einen Zusatz von 0.05 - 1.5% CNT und 1 - 15% Graphit, insbesondere 0.3 - 0.6% CNT bzw. 5 - 10% Graphit in Bezug auf die Gesamtzubereitung kompensierbar. Der Effekt ist auch übertragbar auf die Kombination mit metallbeschichteten Silikaten, Titanoxid und auf Fasern aus Kohlenstoff und Metall, etc.

Die neuen Zubereitungen sind leicht handhabbar und applizierbar, da der Gesamtfüllstoffgehalt und damit auch die Viskosität reduziert sind.

Der Einsatz von CNT und Graphit als die beiden Leitfähigkeitsadditive ermöglicht neuartige Zubereitungen, die geringere Kosten verursachen als herkömmliche Formulierungen.

Die Kombination Graphit/CNT übertrifft jede andere Kombination von Kohlenstoffen bezüglich der elektrischen und thermischen Leitfähigkeit und Verarbeitung, was eine erhebliche Kostenersparnis mit sich bringt.

Weitere Vorteile der Erfindung ergeben sich auch aus der nachfolgenden Auflistung:
Mit der vorliegenden Erfindung ist eine ausgeprägte Dynamik der Flächenheizung realisierbar, die es erlaubt, ΔT von bis zu 400°C und Tmax. von 600°C innerhalb von 3-10 Sekunden zu realisieren, und die innerhalb t<1 min mit geeigneter Kühlung die Ausgangs-T wieder erreicht.

Die Prozesszyklusdauer wird gegenüber anderen Heizlösungen deutlich reduziert, was zu einem höheren Durchsatz führt.

Die Eigenschaften der leitfähigen Zubereitung, beispielsweise einer Heizschicht, können über die Rezeptur einfach und gezielt angepasst werden.

Aufgrund des Temperaturbereichs ist die Heizlösung für alle herkömmlichen Thermoplaste nutzbar, wie beispielsweise PE, PVC, PA, aber auch PEEK, PTFE, und dergleichen.

Der einstellbare Widerstandsbereich erlaubt einen Betrieb mit allen Spannungen, wie beispielsweise Nieder-, Klein-, Hochspannung, und DC oder AC.

Die vorliegende Erfindung eignet sich für den Spritzguss großer Bauteile, aber auch im Bereich Mikrospritzguss.

Die vorliegende Erfindung eignet sich insbesondere für heizbare Beschichtungen und heizbare Formen und/oder Werkzeuge.

Mit der vorliegenden Erfindung lassen sich Lösungen realisieren, bei denen eine Heizbeschichtung auf Basis der leitfähigen Zubereitung und entsprechende Kühlelemente voneinander getrennt sind. Beispielsweise kann in einem solchen Fall vorgesehen sein, dass die leitfähige Zubereitung auf einer Oberfläche der beheizbaren Vorrichtung, insbesondere einer Oberfläche eines Vorrichtungskörpers, beispielsweise einer Oberfläche der Einrichtung zur zumindest zeitweiligen Aufnahme eines Mediums, etwa einer Werkzeugoberfläche, angeordnet oder ausgebildet oder appliziert ist. Ebenso kann die leitfähige Zubereitung innerhalb der beheizbaren Vorrichtung, etwa flächig oder in Kanälen, vorgesehen sein, bevorzugt in der Nähe einer formgebenden Oberfläche, etwa einer Kavität.

Mit der vorliegenden Erfindung lassen sich auch Lösungen realisieren, bei denen eine Heizbeschichtung auf Basis der leitfähigen Zubereitung und entsprechende Kühlelemente miteinander gekoppelt sind. Beispielsweise kann sich die leitfähige Zubereitung an der Wand von Kühlelementen befinden, beispielsweise flächig, bevorzugt in der Nähe einer formgebenden Oberfläche und/oder zu einer solchen Oberfläche hin gerichtet, etwa einer Kavität.

Eine Heizeinrichtung auf Basis einer leitfähigen Zubereitung kann im Gegensatz zu anderen Lösungen, beispielsweise einer Heizpatrone, dreidimensionalen Konturen, insbesondere auch komplexen Oberflächen, ideal folgen. Eine mit einer leitfähigen Zubereitung beschichte Fläche kann in Größe und Form beliebig gewählt werden. Die leitfähige Zubereitung besitzt ein geringes Volumen, da in der Regel nur eine geringe Schichtdicke, beispielsweise von 0,1 mm, vorliegt. Dadurch wird eine unnötige Speicherung und Abgabe von Wärmeenergie nach der Aufheizphase reduziert. Durch eine konturnahe Anordnung und durch eine hohe erreichbare Wärmestromdichte kann die Erwärmung, insbesondere auch ein Variotherm-Zyklus, sehr dynamisch gestaltet werden.

Die vorliegende Erfindung betrifft ein Spritzgusswerkzeug mit einer Einrichtung zur zumindest zeitweiligen Aufnahme eines Mediums, bei dem die Innenwand der Aufnahmeeinrichtung, bei der es sich um eine formgebende Kontaktfläche handelt, durch eine Heizeinrichtung, welche eine leitfähige Zubereitung aufweist, erwärmt wird. Ein durch die leitfähige Zubereitung fließender Strom bewirkt aufgrund des ohmschen Widerstands eine Erzeugung von Wärme.

Besonders bevorzugt eignet sich die vorliegende Erfindung für die, insbesondere dynamische, variotherme Temperierung, von Spritzgießwerkzeugen. Bei der variothermen Temperierung werden sowohl das Heizen als auch die Kühlung des Werkzeuges entsprechend beeinflusst. Bei der üblichen Art der Temperierung trifft die heiße Schmelze, beispielsweise eine Kunststoffschmelze, auf eine im Vergleich dazu kalte Werkzeugwand und gefriert am Rand schlagartig ein. Eine Werkzeugtemperierung stellt dabei sicher, dass die von der Schmelze in die Werkzeugwand eingebrachte Wärmemenge auch wieder abgeführt wird. Manchmal ist es jedoch erforderlich, dass die Abkühlung der eingebrachten Schmelze erst dann einsetzt, wenn das Werkzeug, das heißt, wenn die Kavität, komplett gefüllt ist. Bei derartigen Prozessen handelt es sich um variotherme Prozesse, bei denen für die Werkzeugtemperatur ein bestimmtes Temperaturprofil gefahren wird. Die Einstellung eines solchen Temperaturprofils erfolgt nunmehr über die Heizeinrichtung in Form der leitfähigen Zubereitung. Dabei ist es je nach Ausgestaltung möglich, einen schnellen Wärmeeintrag und eine schnelle Wärmeabfuhr zu realisieren.

Der Wärmeeintrag erfolgt vorzugsweise über die leitfähige Zubereitung. Für die Wärmeabfuhr können besondere Temperierkanäle vorgesehen sein, die von einem Kühlmedium, beispielsweise Wasser, durchströmt werden oder durchströmbar sind. Über die Temperierkanäle können beispielsweise die formgebenden Oberflächen der Einrichtung zur zumindest zeitweiligen Aufnahme eines Mediums, beispielsweise entsprechende Werkzeugoberflächen, gekühlt werden. Zusätzlich kann die Aufnahmeeinrichtung Temperierkanäle aufweisen, mit denen die Aufnahmeeinrichtung auf einer Basistemperatur gehalten werden kann.

Je nach Ausgestaltung können die leitfähige Zubereitung und die Temperierkanäle voneinander getrennt oder miteinander gekoppelt sein. Im letztgenannten Fall können die Temperierkanäle zumindest bereichsweise mit einer leitfähigen Zubereitung beschichtet sein. Während der Aufheizphase ist die Strömungsgeschwindigkeit eines Fluids im Temperierkanal bevorzugt Null, oder der Temperierkanal ist nur mit Luft gefüllt, beispielsweise durch entsprechendes Ausblasen. Bei den Temperierkanälen es sich beispielsweise um Bohrungen, Langlöcher, kann Schlitze, sonstige Ausfräsungen und dergleichen handeln.

In weiterer Ausgestaltung kann vorgesehen sein, dass die Aufnahmeeinrichtung Bohrungen aufweist, die zumindest teilweise, bevorzugt vollständig, mit leitfähiger Zubereitung ausgefüllt sind. Die Bohrungen können einen Durchmesser von etwa 1 mm bis 2 mm besitzen.

Durch die vorliegende Erfindung lassen sich hinsichtlich der in einer wie vorstehend beschriebenen erfindungsgemäßen Vorrichtung hergestellten Produkte oder der mit einem wie vorstehend beschriebenen erfindungsgemäßen Verfahren hergestellten Produkte eine Reihe von Vorteilen erreichen, wie beispielsweise die Vermeidung von Bindenahtkerben, eine Erhöhung des Glanzes, eine verbesserte Oberflächenqualität von geschäumten Teilen oder von faserverstärkten Teilen, eine Reduktion von Einfallstellen, eine verbesserte Konturtreue und Oberflächenbeschaffenheit, eine Abformung feinster Strukturen, eine Reduktion des Füllwiderstands, eine Verbesserung der Kristallisation und dergleichen.

Nachfolgend wird die Erfindung anhand von Ausführungsbeispielen unter Bezugnahme auf die beiliegenden Zeichnungen näher erläutert.

Es zeigen:
- Figur 1: ein erstes Ausführungsbeispiel einer erfindungsgemäßen beheizbaren Vorrichtung;
- Figur 2: ein zweites Ausführungsbeispiel einer erfindungsgemäßen beheizbaren Vorrichtung;
- Figur 3: ein drittes Ausführungsbeispiel einer erfindungsgemäßen beheizbaren Vorrichtung;
- Figur 4: ein viertes Ausführungsbeispiel einer erfindungsgemäßen beheizbaren Vorrichtung;
- Figur 5: ein fünftes Ausführungsbeispiel einer erfindungsgemäßen beheizbaren Vorrichtung;
- Figur 6: ein sechstes Ausführungsbeispiel einer erfindungsgemäßen beheizbaren Vorrichtung; und
- Figur 7: ein siebtes Ausführungsbeispiel einer erfindungsgemäßen beheizbaren Vorrichtung.

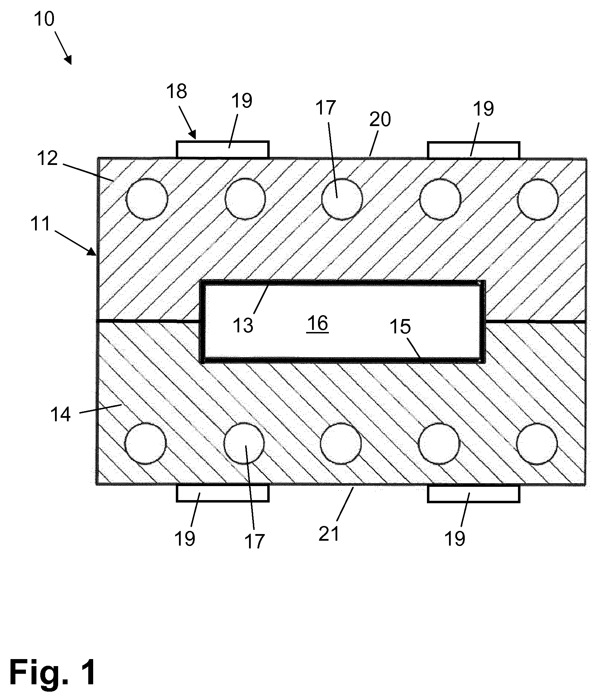

In den Figuren 1 bis 7 ist eine beheizbare Vorrichtung 10 in Form einer Spritzgießvorrichtung dargestellt. Die beheizbare Vorrichtung 10 weist einen Vorrichtungskörper in Form einer Einrichtung 11 zur zumindest zeitweiligen Aufnahme eines Mediums auf, bei der es sich um ein Werkzeug handelt. Die Aufnahmeeinrichtung 11 ist zweiteilig ausgebildet und weist einen ersten Teil 12 mit einer formgebenden Oberfläche 13 sowie einen zweiten Teil 14 mit einer formgebenden Oberfläche 15 auf. Die formgebenden Oberflächen 13 und 15 begrenzen die Kavität 16 der Aufnahmeeinrichtung 11, in der das eingefüllte Medium geformt wird. Bei der Kavität 16 handelt es sich um den Werkzeughohlraum. Weiterhin sind in den beiden Teilen 12 und 14 der Aufnahmeeinrichtung 11 verschiedene Temperierkanäle 17 vorgesehen, mit denen die Aufnahmeeinrichtung 11 auf einer Basistemperatur gehalten wird.

Zusätzlich weist die beheizbare Vorrichtung in den Figuren 1 bis 7 eine Heizeinrichtung 18 auf. Die Heizeinrichtung 18 weist an verschiedenen Teilen eine leitfähige Zubereitung 19 auf. Die leitfähige Zubereitung 19 besteht aus einem Grundmaterial, einer so genannten ersten Phase, in der sich wenigstens ein Leitfähigkeitsadditiv, bevorzugt wenigstens zwei Leitfähigkeitsadditive, befinden. Wenigstens ein Leitfähigkeitsadditiv ist auf Kohlenstoffbasis oder als Kohlenstoffmaterial ausgebildet. Dadurch erhält die leitfähige Zubereitung eine elektrische und/oder thermische Leitfähigkeit. Die leitfähige Zubereitung 19 ist mit elektrischen Kontakten versehen, über die die leitfähige Zubereitung insbesondere seitlich bestromt wird. Durch den elektrischen Widerstand beim Hindurchfließen des Stroms wird die leitfähige Zubereitung erwärmt. Je nach Bedarf des Wärmeeintrags kann die leitfähige Zubereitung 19 an verschiedenen Stellen der beheizbaren Vorrichtung 10 vorgesehen sein. Bevorzugt wird die leitfähige Zubereitung 19 dabei in Form einer Beschichtung aufgebracht.

Bei dem in Figur 1 dargestellten Ausführungsbeispiel ist die leitfähige Zubereitung 19 an den äußeren Oberflächen 20, 21 der beiden Teile 12, 14 der Aufnahmeeinrichtung 11 angeordnet. Damit kann die leitfähige Zubereitung 19 besonders einfach, insbesondere auch noch nachträglich, an der beheizbaren Vorrichtung 10 angebracht und nachgerüstet werden. Durch eine Bestromung der einzelnen Elemente der leitfähigen Zubereitung 19 lässt sich ein ganz gezielter, homogener Wärmeeintrag in die Aufnahmeeinrichtung 11 realisieren. Dabei ist die Heizbeschichtung in Form der leitfähigen Zubereitung 19 von den Temperierkanälen 17 getrennt. Die Kontur der formgebenden Oberflächen 13, 15 kann eben sein oder eine dreidimensionale Krümmung aufweisen.

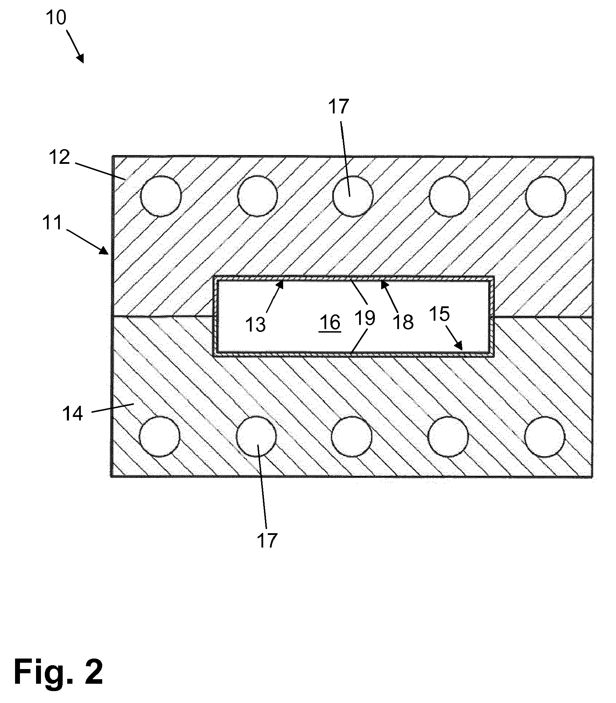

Auch bei dem in Figur 2 dargestellten Ausführungsbeispiel sind die Heizbeschichtung in Form der leitfähigen Zubereitung 19 und die Temperierkanäle 17 voneinander getrennt. Bei diesem Ausführungsbeispiel ist die leitfähige Zubereitung 19 direkt auf den beiden formgebenden Oberflächen 13 und 15 der beiden Teile 12, 14 der Aufnahmeeinrichtung 11 appliziert. Dadurch ist das aufzuheizende Werkzeugvolumen und damit die Aufheizzeit minimal. Das Kühlen der formgebenden Oberflächen 12, 14, bei denen es sich um Werkzeugoberflächen handelt, kann über die Temperierkanäle 17 erfolgen. Die leitfähige Zubereitung 19 kann mit einer metallischen Schicht zur Realisierung einer Erodierstruktur, einer Ledernarbe oder anderer Werkzeugoberflächen überzogen sein. Eine solche metallische Schicht kann durch eine Galvanik-, PVD-Beschichtung und dergleichen aufgetragen werden. Die Kontur der formgebenden Oberflächen 13, 15 kann eben sein oder eine dreidimensionale Krümmung aufweisen.

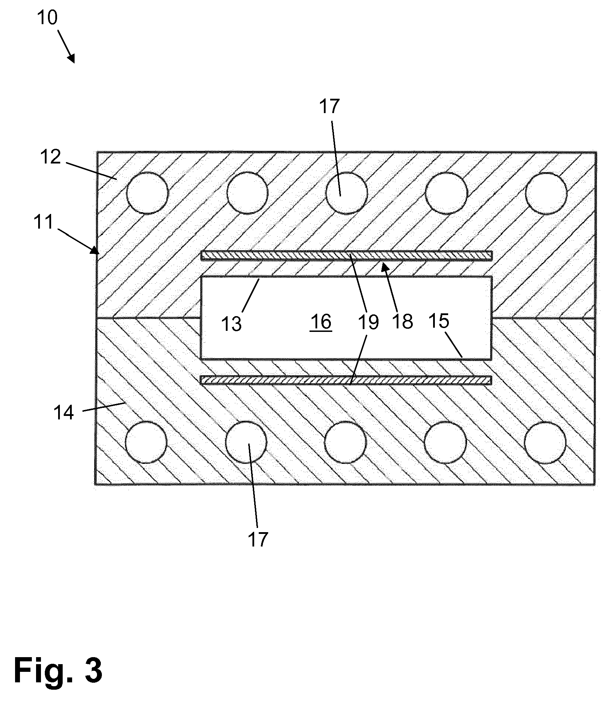

Auch bei dem in Figur 3 dargestellten Ausführungsbeispiel sind die Heizbeschichtung in Form der leitfähigen Zubereitung 19 und die Temperierkanäle 17 voneinander getrennt. Die leitfähige Zubereitung 19 befindet sich flächig knapp unterhalb der Kavität 16. Das Aufheizen kann rasch und gleichmäßig erfolgen. Das Kühlen der formgebenden Oberflächen 13, 15 kann durch die Temperierkanäle 17 realisiert werden. Die Kontur der formgebenden Oberflächen 13, 15 kann eben sein oder eine dreidimensionale Krümmung aufweisen.

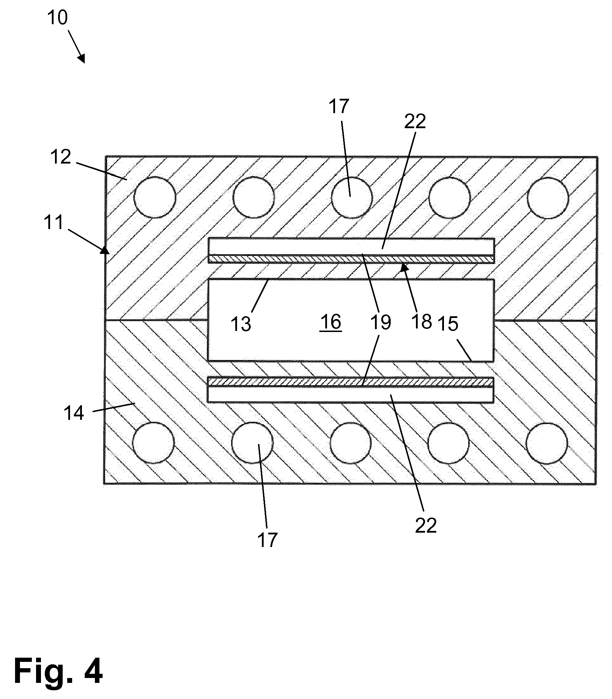

Das in Figur 4 dargestellte Ausführungsbeispiel zeigt eine beheizbare Vorrichtung 10 mit Aufnahmeeinrichtung 11, bei der die Heizeinrichtung 18 in Form der leitfähigen Zubereitung 19 und Temperierkanäle miteinander gekoppelt sind. Hierzu sind entsprechende Temperierkanäle 22 mit einer leitfähigen Zubereitung 19 beschichtet. Bei dieser Ausgestaltung kann die Temperatur der formgebenden Oberflächen 13, 15 schneller gesenkt werden. Die Zykluszeit kann minimiert werden. Während der Aufheizphase ist die Strömungsgeschwindigkeit eines Fluids im Temperierkanal 22 Null, oder der Temperierkanal 22 ist nur mit Luft gefüllt, beispielsweise durch entsprechendes Ausblasen. Die Kontur der formgebenden Oberflächen 13, 15 kann eben sein oder eine dreidimensionale Krümmung aufweisen. Die leitfähige Zubereitung 19 befindet sich flächig knapp unterhalb der Kavität 16. Die formgebenden Oberflächen 13, 15 werden kavitätsnah flächig gekühlt. Durch geeignete versteifende Vorkehrungen wird eine ausreichende Stabilität der Aufnahmeeinrichtung 11, das heißt des Werkzeugs, gewährleistet. Zusätzlich weist die als Werkzeug ausgebildete Aufnahmeeinrichtung 11 Temperierkanäle 17 auf, mit denen die Aufnahmeeinrichtung 11 auf einer Basistemperatur gehalten werden kann.

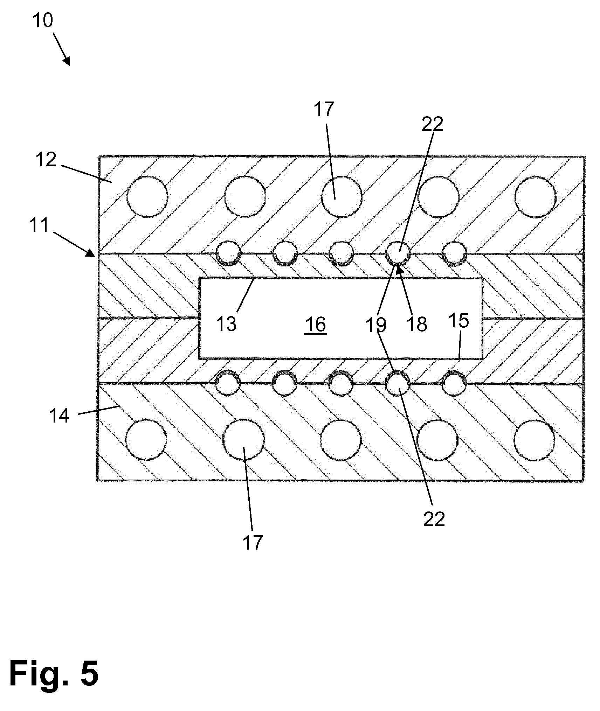

Das in Figur 5 dargestellte Ausführungsbeispiel zeigt ebenfalls eine beheizbare Vorrichtung 10 mit Aufnahmeeinrichtung 11, bei der die Heizeinrichtung 18 in Form der leitfähigen Zubereitung 19 und Temperierkanäle miteinander gekoppelt sind. Hierzu sind entsprechende Temperierkanäle 22 mit einer leitfähigen Zubereitung 19 beschichtet. Bei dieser Ausgestaltung kann die Temperatur der formgebenden Oberflächen 13, 15 schneller gesenkt werden. Die Zykluszeit kann minimiert werden. Während der Aufheizphase ist die Strömungsgeschwindigkeit eines Fluids im Temperierkanal 22 Null, oder der Temperierkanal 22 ist nur mit Luft gefüllt, beispielsweise durch entsprechendes Ausblasen. Die Kontur der formgebenden Oberflächen 13, 15 kann eben sein oder eine dreidimensionale Krümmung aufweisen.

Die beiden Teile 12 und 14 der Aufnahmeeinrichtung 11 sind dazu zweigeteilt. Die leitfähige Zubereitung 19 befindet sich in einem als Strömungskanal ausgebildeten Temperierkanal 22, wobei die leitfähige Zubereitung 19 zur Kavität 16 hin gerichtet ist. Dadurch erfolgt nur ein Hauptwärmefluss zur Kavität 16 hin. Im Temperierkanal 22 selbst strömt ein Fluid. Zusätzlich weist die als Werkzeug ausgebildete Aufnahmeeinrichtung 11 Temperierkanäle 17 auf, mit denen die Aufnahmeeinrichtung 11 auf einer Basistemperatur gehalten werden kann.

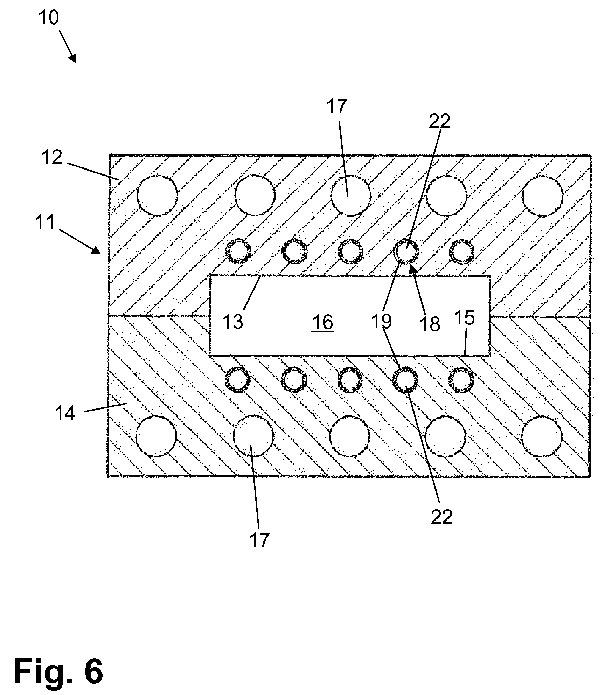

Das in Figur 6 dargestellte Ausführungsbeispiel zeigt ebenfalls eine beheizbare Vorrichtung 10 mit Aufnahmeeinrichtung 11, bei der die Heizeinrichtung 18 in Form der leitfähigen Zubereitung 19 und Temperierkanäle miteinander gekoppelt sind. Hierzu sind entsprechende Temperierkanäle 22 mit einer leitfähigen Zubereitung 19 beschichtet. Bei dieser Ausgestaltung kann die Temperatur der formgebenden Oberflächen 13, 15 schneller gesenkt werden. Die Zykluszeit kann minimiert werden. Während der Aufheizphase ist die Strömungsgeschwindigkeit eines Fluids im Temperierkanal 22 Null, oder der Temperierkanal 22 ist nur mit Luft gefüllt, beispielsweise durch entsprechendes Ausblasen. Die Kontur der formgebenden Oberflächen 13, 15 kann eben sein oder eine dreidimensionale Krümmung aufweisen.

Die leitfähige Zubereitung 19 befindet sich an der Wandung der Temperierkanäle 22, bei denen es sich beispielsweise um Bohrungen, Langlöcher, Schlitze, sonstige Ausfräsungen und dergleichen handeln kann. Zusätzlich weist die als Werkzeug ausgebildete Aufnahmeeinrichtung 11 Temperierkanäle 17 auf, mit denen die Aufnahmeeinrichtung 11 auf einer Basistemperatur gehalten werden kann.

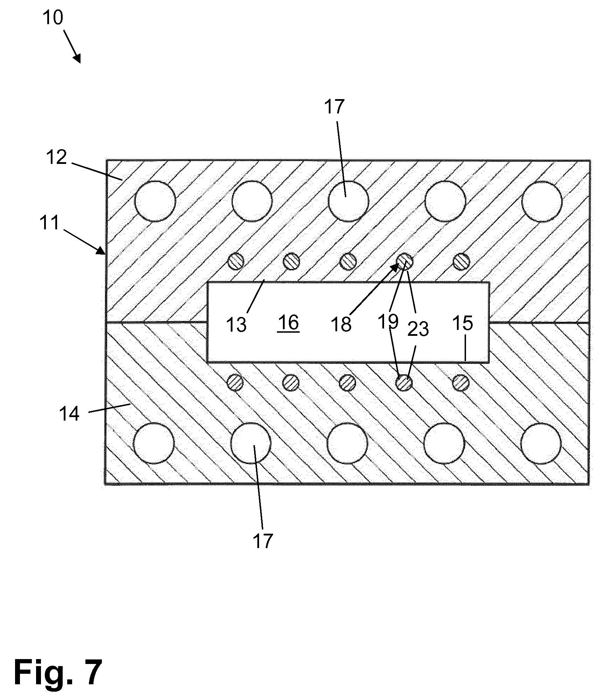

Bei dem in Figur 7 dargestellten Ausführungsbeispiel sind die Heizbeschichtung in Form der leitfähigen Zubereitung 19 und die Temperierkanäle 17 voneinander getrennt. Die leitfähige Zubereitung 19 befindet sich in Bohrungen 23 knapp unterhalb der Kavität 16. Die Bohrungen 23 sind mit der leitfähigen Zubereitung 19 ausgefüllt. Die Bohrungen können einen Durchmesser von etwa 1 mm bis 2 mm besitzen. Damit ergibt sich der Vorteil, dass die Aufnahmeeinrichtung 11 beziehungsweise das Werkzeug nur in geringem Masse geschwächt wird. Aufgrund des geringen Abstandes der Bohrungen zur Kavität 16 kann die zugeführte Wärmemenge minimiert werden. Das Aufheizen kann rasch erfolgen. Die Kühlung der formgebenden Oberflächen 13, 15 kann durch Temperierkanäle 17 erfolgen.

Die in den Figuren 1 bis 7 dargestellten Anordnungen können anstelle einer kompletten, flächigen Temperierung auch für eine partielle, lokale Temperieranwendung, beispielsweise zur Vermeidung von Bindenähten, eingesetzt werden.

### Bezugszeichenliste

- 10: Beheizbare Vorrichtung (Spritzgießvorrichtung)
- 11: Einrichtung zur zumindest zeitweiligen Aufnahme eines Mediums / Aufnahmeeinrichtung (Werkzeug)
- 12: Erster Teil der Aufnahmeeinrichtung
- 13: Formgebende Oberfläche
- 14: Zweiter Teil der Aufnahmeeinrichtung
- 15: Formgebende Oberfläche
- 16: Kavität
- 17: Temperierkanal
- 18: Heizeinrichtung
- 19: Leitfähige Zubereitung
- 20: Äußere Oberfläche der Aufnahmeeinrichtung
- 21: Äußere Oberfläche der Aufnahmeeinrichtung
- 22: Temperierkanal
- 23: Bohrung

## Patentansprüche

1. Beheizbare Vorrichtung (10), aufweisend einen Vorrichtungskörper sowie eine Heizeinrichtung (18) zur zumindest temporären und/oder bereichsweisen Erhitzung der Vorrichtung (10) und/oder des Vorrichtungskörpers,
wobei die Heizeinrichtung (18) eine elektrisch und/oder thermisch leitfähige Zubereitung (19) aufweist, wobei die leitfähige Zubereitung (19) wenigstens ein Kohlenstoffmaterial aufweist und die leitfähige Zubereitung (19) zumindest bereichsweise an der beheizbaren Vorrichtung (10) angeordnet und/oder ausgebildet ist, wobei die beheizbare Vorrichtung als Spritzgießvorrichtung ausgebildet ist und wobei der Vorrichtungskörper eine Einrichtung (11) zur zumindest zeitweiligen Aufnahme eines Mediums aufweist, und wobei die Heizeinrichtung (18) zur zumindest temporären und/oder bereichsweisen Erhitzung der Einrichtung (11) zur Aufnahme des Mediums und/oder des Mediums ausgebildet ist, wobei die Einrichtung (11) zur zumindest zeitweiligen Aufnahme eines Mediums als eine einteilige oder mehrteilige Form und/oder als ein einteiliges oder mehrteiliges Werkzeug ausgebildet ist, und wobei die Vorrichtung (10) auf wenigstens einer Oberfläche (13, 15, 20, 21) zumindest bereichsweise mit der leitfähigen Zubereitung (19) beschichtet ist und/ oder die leitfähige Zubereitung (19) innerhalb der Vorrichtung (10) angeordnet oder ausgebildet ist, **dadurch gekennzeichnet, dass** die leitfähige Zubereitung (19) eine erste Phase sowie wenigstens zwei in der ersten Phase vorgesehene Leitfähigkeitsadditive aufweist und die erste Phase ein Grundmaterial aus Kunststoff ist.

2. Vorrichtung nach Anspruch 1,
**dadurch gekennzeichnet, dass** das erste und/oder zweite Leitfähigkeitsadditiv auf Kohlenstoffbasis und/oder als Kohlenstoffmaterial ausgebildet ist/sind.

3. Vorrichtung nach einem der Ansprüche 1 bis 2,
**dadurch gekennzeichnet, dass** die leitfähige Zubereitung (19) als Beschichtung ausgebildet ist, und dass die Vorrichtung (10), zumindest bereichsweise mit der leitfähigen Zubereitung (19) beschichtet ist.

4. Vorrichtung nach einem der Ansprüche 1 bis 3,
**dadurch gekennzeichnet, dass** die Vorrichtung (10) wenigstens einen Kanal (22) aufweist und dass die leitfähige Zubereitung (19) an und/oder in wenigstens einem Kanal (22) angeordnet oder ausgebildet ist.

5. Vorrichtung nach einem der Ansprüche 1 bis 4,
**dadurch gekennzeichnet, dass** die leitfähige Zubereitung (19) elektrische Kontakte, insbesondere zur seitlichen Bestromung, oder Mittel zum Anbringen von elektrischen Kontakten aufweist.

6. Vorrichtung nach einem der Ansprüche 1 bis 5
**dadurch gekennzeichnet, dass** die leitfähige Zubereitung (19) nach außen mit einer isolierenden Schicht, insbesondere einer thermisch und/oder elektrisch isolierenden Schicht, abgedeckt ist und/oder dass eine Oberfläche, die mit einer leitfähigen Zubereitung beschichtet wird oder ist, mit einer isolierenden Beschichtung versehen ist oder wird.

7. Verfahren zur zumindest temporären und/oder bereichsweisen Erhitzung einer beheizbaren Vorrichtung (10) nach einem der Ansprüche 1 - 6, insbesondere eines Vorrichtungskörpers, wobei die Erhitzung der Vorrichtung mittels einer Heizeinrichtung (18) der beheizbaren Vorrichtung (10) erfolgt,
**dadurch gekennzeichnet, dass** zur Erhitzung der Vorrichtung (10) die Heizeinrichtung (18), die als elektrisch und/oder thermisch leitfähige Zubereitung (19) ausgebildet ist, welche wenigstens ein Kohlenstoffmaterial aufweist und zumindest bereichsweise an der beheizbaren Vorrichtung (10) angeordnet und/oder ausgebildet ist, aktiviert wird, wodurch eine Einrichtung zur zumindest zeitweiligen Aufnahme eines Mediums erhitzt wird.

8. Verfahren nach Anspruch 7,
**dadurch gekennzeichnet, dass** die leitfähige Zubereitung (19) elektrische Kontakte, insbesondere zur seitlichen Bestromung, aufweist oder mit elektrischen Kontakten verbunden ist und dass die Betätigung der leitfähigen Zubereitung mittels einer Bestromung der leitfähigen Zubereitung über die elektrischen Kontakte erfolgt.

9. Verfahren nach Anspruch 7 oder 8,
**dadurch gekennzeichnet, dass** dieses zur Temperierung, insbesondere zur variothermen Temperierung, eines Mediums in einem Spritzgießverfahren durchgeführt wird.

10. Verwendung einer beheizbaren Vorrichtung (10) nach wenigstens einem der Ansprüche 1 - 7 in einem Variotherm-Verfahren im Thermoplastspritzguss.

## Claims

1. Heatable device (10), comprising a device body as well as heating means (18) for at least temporary and/or regional heating of the device (10) and/or the device body, wherein the heating means (18) comprises an electrically and/or thermally conductive compound (19), wherein the conductive compound (19) comprises at least one carbon material and the conductive compound (19) is arranged and/or formed at least regionally at the heatable device (10), wherein the heatable device is constructed as an injection-moulding device and wherein the device body comprises an arrangement (11) for at least temporary reception of a medium and wherein the heating means (18) is constructed for at least temporary and/or regional heating of the arrangement (11) for receiving the medium and/or of the medium, wherein the arrangement (11) for at least temporary reception of a medium is constructed a single-part or multi-part mould and/or as a single-part or multi-part tool and wherein the device (10) is coated at least regionally on at least one surface (13, 15, 20, 21) with the conductive compound (19) and/or the conductive compound (19) is arranged or formed within the device (10), **characterised in that** the conductive compound (9) has a first phase and at least two conductivity additives provided in the first phase and the first phase is a base material of plastic.

2. Device according to claim 1, **characterised in that** the first and/or second conductivity additive is or are formed on a carbon base and/or as carbon Material.

3. Device according to one of claims 1 and 2, **characterised in that** the conductive compound (19) is formed as a coating and that the device (10) is coated at least regionally with the conductive compound (19).

4. Device according to any one of claims 1 to 3, **characterised in that** the device (10) has at least one channel (22) and that the conductive compound (19) is arranged or formed at and/or in at least one channel (22).

5. Device according to any one of claims 1 to 4, **characterised in that** the conductive compound (19) has electrical contacts, particularly for lateral current supply, or means for mounting electrical contacts.

6. Device according to any one of claims 1 to 5, **characterised in that** the conductive compound (19) is outwardly covered by an insulating layer, particularly a thermally and/or an electrically insulating layer, and/or that a surface, which is or is coated with conductive compound, is provided with an insulating coating.

7. Method for at least temporary and/or regional heating of a heatable device (10) according to any one of claims 1 to 6, particularly a device body, wherein the heating of the device is carried out by way of heating means (18) of the heatable device (10), **characterised in that** for heating of the device (10) the heating means (18), which is formed as an electrically and/or a thermally conductive compound (19), the compound comprising at least one carbon material and being arranged and/or formed at least regionally at the heatable device (10), is activated, whereby an arrangement for at least temporary reception of a medium is heated.

8. Method according to claim 7, **characterised in that** the conductive compound (19) has electrical contacts, particularly for lateral current supply, or is connected with electrical contacts and that the actuation of the conductive compound is carried out by means of current supply of the conductive compound by way of the electrical contacts.

9. Method according to claim 7 or 8, **characterised in that** this is carried out for temperature control, particularly for variotherm temperature control, of a medium in an injection-moulding method.

10. Use of a heatable device (10) according to at least one of claims 1 to 7 in a variotherm method in thermoplastic injection moulding.

## Revendications

1. Installation pouvant être chauffée (10), comprenant un corps d'installation ainsi qu'un dispositif de chauffage (18) pour le chauffage au moins temporaire et/ou partiel de l'installation (10) et/ou du corps d'installation, le dispositif de chauffage (18) comportant une préparation (19) électriquement et/ou thermiquement conductrice, la préparation conductrice (19) comprenant au moins un matériau carbone et la préparation conductrice (19) étant au moins partiellement disposée et/ou formée au niveau de l'installation pouvant être chauffée (10), l'installation pouvant être chauffée étant réalisée comme installation de moulage par injection et le corps d'installation comportant un dispositif (11) destiné à recevoir au moins temporairement un milieu, et le dispositif de chauffage (18) étant prévu pour le chauffage au moins temporaire et/ou partiel du dispositif (11) destiné à recevoir le milieu et/ou du milieu, le dispositif (11) destiné à recevoir au moins temporairement un milieu étant réalisé comme une seule ou de plusieurs pièces à moules et/ou sous la forme d'un outils d'une seule ou de plusieurs pièces, et l'installation (10) étant sur au moins une surface (13, 15, 20, 21) revêtue au moins partiellement de la préparation conductrice (19) et/ou la préparation conductrice (19) étant disposée ou formée à l'intérieur de l'installation (10), **caractérisée en ce que** la préparation conductrice (19) présente une première phase ainsi qu'au moins deux additifs de conductivité prévus dans la première phase, et **en ce que** la première phase est un matériau de base en matière synthétique.

2. Installation selon la revendication 1,
**caractérisée en ce que**
le premier et/ou le deuxième additif de conductivité est/sont réalisés sur base carbone et/ou comme matériau(x) carbone.

3. Installation selon l'une des revendications 1 et 2,
**caractérisée en ce que**
la préparation conductrice (19) est réalisée comme revêtement, et **en ce que** l'installation (10) est au moins partiellement revêtue de la préparation conductrice (19).

4. Installation selon l'une des revendications 1 à 3,
**caractérisée en ce que**
ladite installation (10) comporte au moins un canal (22) et **en ce que** la préparation conductrice (19) est disposée ou formée sur et/ou dans au moins un canal (22).

5. installation selon l'une des revendications 1 à 4,
**caractérisée en ce que**
la préparation conductrice (19) comporte des contacts électriques, en particulier pour un passage latéral de courant, ou un moyen d'application de contacts électriques.

6. installation selon l'une des revendications 1 à 5,
**caractérisée en ce que**
la préparation conductrice (19) est extérieurement recouverte d'un couche isolante, en particulier d'une couche thermiquement et/ou électriquement isolante et/ou **en ce qu'**une surface qui est ou sera revêtue d'une préparation conductrice, est pourvue ou sera pourvue d'un revêtement isolant.

7. Procédé de chauffage au moins temporaire et/ou partiel d'une installation pouvant être chauffée (10) selon l'une des revendications 1 à 6, en particulier d'un corps d'installation, le chauffage de l'installation étant effectué au moyen d'un dispositif de chauffage (18) de l'installation (10) pouvant être chauffée,
**caractérisé en ce que**
le dispositif de chauffage (18) est activé pour le chauffage de l'installation (10) en réalisant comme préparation (19) électriquement et/ou thermiquement conductrice qui comprend au moins un matériau carbone et est au moins partiellement disposée et/ou formée au niveau de l'installation (10) pouvant être chauffée, et par lequel un dispositif destiné à recevoir au moins temporairement un milieu est chauffé.

8. Procédé selon la revendication 7,
**caractérisé en ce que**
la préparation conductrice (19) comporte des contacts électriques, en particulier pour le passage latéral de courant, ou est reliée à des contacts électriques, et **en ce que** l'activation de la préparation conductrice est effectuée au moyen d'un passage de courant de la préparation conductrice par les contacts électriques.

9. Procédé selon la revendication 7 ou 8,
**caractérisé en ce que**
ledit procédé est exécuté pour la thermostatisation, en particulier l'équilibrage variothermique de température d'un milieu lors d'un processus de moulage par injection.

10. Utilisation d'une installation pouvant être chauffée (10) selon au moins une des revendications 1 à 7 dans le cadre d'un procédé variothermique lors d'un moulage par injection.
